# FASCICULE DE BREVET EUROPEEN

(11) **EP 0 910 723 B1**
(45) Date de publication et mention de la délivrance du brevet: **17.09.2003**
(21) Numéro de dépôt: 98912546.3
(22) Date de dépôt: 25.02.1998
(51) Int. Cl.: E21B 43/01, E21B 43/013, F16L 35/00, E21B 17/01

(54) **DISPOSITIF LIMITEUR DE COURBURE D'UNE CONDUITE FLEXIBLE**
VORRICHTUNG ZUR BESCHRÄNKUNG DES BIEGERADIUS EINER FLEXIBLEN ROHRLEITUNG
DEVICE FOR LIMITING THE BENDING RADIUS OF A FLEXIBLE DUCT

(30) Priorité: 14.03.1997 FR 9703095
(43) Date de publication de la demande: 28.04.1999
(73) Titulaire: COFLEXIP, 92973 Paris La Defense (FR)
(72) Inventeur: SECHER, Philippe, F-76250 Deville Les Rouen (FR); SMYTH, John, Aberdeen AB10 6SS (GB); FELIX-HENRY, Antoine, Aberdeen AB10 6AP (GB)
(74) Mandataire: Levy, David
(86) Numéro de dépôt international: FR9800369
(87) Numéro de publication internationale: WO98041729

(56) Documents cités:
- EP-A- 0 296 056
- EP-A- 0 565 445
- WO-A-92/12376
- WO-A-94/09245
- FR-A- 2 397 084
- FR-A- 2 446 981
- FR-A- 2 538 444
- GB-A- 2 291 686
- US-A- 4 794 957

## Description

La présente invention concerne un dispositif limiteur de courbure d'une conduite flexible, en particulier dans le cas où la conduite comporte un embout de diamètre supérieur à celui de la conduite, et plus particulièrement, un dispositif comprenant un raidisseur destiné à équiper une conduite flexible dans laquelle circule un fluide chaud dont la température est supérieure à 80°C.

De telles conduites flexibles dont la structure est bien connue, sont utilisées notamment en exploitation pétrolière, pour la remontée ou le transport d'hydrocarbures à partir d'une tête de puits sous-marine vers une plate-forme ou un équipement flottant tel qu'un bateau Floating Production and Storage Offloading qui est désigné par l'abréviation FPSO. Ces conduites flexibles sont décrites dans le document "Recommended Practice for Flexible Pipe - API Recommended Practice 17B" publié par l'American Petroleum Institute.

Le dispositif limiteur de courbure selon l'invention est également utilisable avec d'autres types de canalisations flexibles, en particulier dans le cas des installations sous-marines d'exploitation pétrolière, telles que des lignes flexibles à conduites multiples appelées ombilicaux ou des câbles électriques.

Lorsque la conduite flexible travaille en statique comme c'est le cas lorsqu'elle repose sur le fond marin, elle est très peu soumise à des flexions. Par contre, lorsqu'elle travaille en dynamique, comme c'est le cas lorsqu'elle est utilisée en tant que riser, alors elle est soumise à des déformations alternées et notamment à des flexions qui peuvent conduire à des courbures importantes de ladite conduite flexible. Or, il est nécessaire que le rayon de courbure minimum (MBR en anglais) ne soit pas inférieur à une certaine valeur (ainsi que cela est rappelé dans le document API RP 17 B cité ci-dessus). Pour limiter le rayon de courbure à une valeur acceptable, on utilise des raidisseurs qui réduisent la flexion de la conduite aux endroits critiques (raidisseurs décrits dans API RP 17 B sous le nom de "bend stiffener"). Par exemple, un raidisseur est monté dans la zone de jonction de la conduite flexible avec le ou les embouts terminaux qui équipent la conduite flexible à ses deux extrémités, un embout terminal comportant, tel qu'il est décrit dans API RP 17B sous le nom d'"end fitting", d'une part, un organe de terminaison de la conduite flexible ("end termination"), et d'autre part, un organe de raccordement ("end connecter") avec les canalisations correspondantes auxquelles la conduite flexible est reliée, notamment une tête de puits sous-marine et/ou un support à la surface tel qu'un navire ou une plate-forme. EP 0 296 056 et FR 2538444 montrent des raidisseurs utilisés en pied de colonne montante.

Un raidisseur peut également être monté sur la partie courante de la conduite flexible, à distance des embouts terminaux, par exemple au bord d'un support intermédiaire ("pipe tray") dans le cas d'une conduite flexible en riser avec une configuration en "lazy S" ou en "Steep S", comme il est décrit dans API RP 17 B, ou encore à l'extrémité d'un tube guide rigide protégeant la partie supérieure de la conduite flexible, comme il est représenté aux figures 11, 12 et 13 de WO 92/12376 ou dans EP-565 445 (Encastrement raidisseur de Coflexip).

De tels raidisseurs sont bien connus. Ils peuvent être constitués par un simple corps élastique venu de moulage en polyuréthane et peuvent comprendre alternativement une structure interne de renforcement comme il est décrit dans WO 92/12376 ou dans GB-A-2 291 686. Ils peuvent également comprendre des moyens de dissipation thermique, ainsi que cela est préconisé dans FR-95 14 114 - non publié- de la Déposante, et GB-A-2 291 686. Les moyens de dissipation thermique sont destinés à dissiper une partie de la chaleur à l'interface entre le corps élastique du raidisseur et la conduite flexible, ladite chaleur provenant du fluide circulant dans ladite conduite flexible. En effet, il s'est avéré que ladite chaleur endommageait la matière plastique (polyuréthane) du raidisseur par hydrolyse au contact de l'eau de mer, l'hydrolyse-conduisant à une perte des propriétés mécaniques du raidisseur et notamment à une perte de raideur.

Dans tous les cas d'utilisation d'un raidisseur, ce dernier est, normalement, disposé sur la conduite flexible avant montage et fixation du ou des embouts terminaux, un jeu radial entre la conduite flexible permettant de faire coulisser ce dernier le long de la conduite flexible. Après montage des embouts terminaux sur la conduite flexible, le raidisseur est amené, par coulissement, sur l'embout terminal correspondant et fixé à ce dernier par des moyens appropriés qui sont au moins partiellement décrits dans les documents de l'art antérieur. Alternativement, si le raidisseur doit être installé en longueur courante de la conduite, il est positionné à l'endroit voulu par des moyens de fixations provisoires ou définitifs, tels qu'un collier serré autour de la conduite.

Dans ces conditions, c'est tout l'ensemble constitué par la conduite flexible, par les embouts terminaux et le raidisseur, qui est transporté sur le site d'exploitation ; le plus souvent, cet ensemble est enroulé sur une bobine ou disposé dans un panier aux fins du transport. L'enroulement sur une bobine et le transport ultérieur posent de graves problèmes jusqu'à présent mal résolus. En effet, indépendamment du poids de la conduite flexible et des embouts terminaux, il est important de noter que chaque raidisseur peut présenter des longueurs qui peuvent être de l'ordre de quatre mètres et constituer avec l'embout terminal une charge localisée pouvant atteindre environ trois tonnes. Il en résulte des problèmes d'encombrement, de balourd et de manutention qui affectent sévèrement l'ensemble des opérations de mise en oeuvre depuis la fin de la fabrication de la conduite et son chargement sur navire jusqu'à son installation sur le site en mer. En particulier, le passage du raidisseur dans les divers organes de manutention de la conduite, tels que des tensionneurs à chenille, ou des supports incurvés ou gorges de poulie, nécessite des manoeuvres délicates et longues.

Dans la pratique, le dimensionnement des raidisseurs est actuellement limité par ces problèmes de manutention provoqués par leur montage sur la conduite flexible. Or l'augmentation continue du diamètre et du poids des conduites flexibles et de la profondeur d'eau fait qu'il y a maintenant un besoin pour des raidisseurs encore plus lourds et dont la longueur dépasserait cinq mètres, ce qui est pratiquement irréalisable à cause des difficultés de manutention.

Pour surmonter ces difficultés, il serait naturel d'envisager le montage des raidisseurs in situ, au moment d'installer la conduite flexible à bord du navire de pose. L'installation par surmoulage autour du flexible est évidemment exclue, à cause de la durée de l'opération et des conditions d'environnement. On connaît par ailleurs des raidisseurs réalisés en deux moitiés qui peuvent être montées au dernier moment et assemblées autour de la conduite flexible par des moyens tels que des colliers boulonnables, ainsi que cela est décrit dans FR-2 446 981, mais l'expérience a montré qu'un tel raidisseur est inapte à présenter, quelle que soit la direction de flexion de la conduite, les caractéristiques mécaniques requises.

La présente invention a pour but de remédier aux inconvénients précités et de proposer une solution simple et efficace sans obérer le coût de fabrication de l'ensemble rappelé ci-dessus.

La présente invention a pour objet un dispositif limiteur de courbure selon la revendication 1.

Un avantage important de la présente invention réside dans le fait qu'on peut transporter indépendamment l'un de l'autre le ou les raidisseurs et la conduite flexible munie de ses deux embouts montés en usine, la mise en place du ou des raidisseurs étant alors effectuée sur le site d'installation sans nécessiter d'autres moyens que ceux habituellement disponibles pour la mise en place de l'installation de ladite conduite flexible à partir du navire de pose, comme sont mis en place divers accessoires de la conduite, tels que des bouées.

En effet, en réalisant un raidisseur dont le diamètre interne du passage central traversant est au moins égal au diamètre maximum de l'embout terminal, à la tolérance près, il est possible d'amener le raidisseur par l'extérieur de la conduite flexible et de le placer autour de l'embout terminal, puis de le faire coulisser autour ou à l'intérieur de l'embout jusqu'à la position adéquate sur la conduite flexible autour de l'élément de support.

Par diamètre maximum de l'embout terminal, on entend les dimensions externes que présente la partie non dissociable de plus grandes dimensions de l'embout terminal autour duquel doit passer le raidisseur. Lorsque l'embout terminal comprend ou est fixé à demeure sur une bride de raccordement (end connector) de dimensions transversales supérieures à celles du corps central de l'embout (end termination), ce sont les dimensions de ladite bride qui constituent le diamètre maximum puisque dans un tel cas, le raidisseur doit pouvoir être coulissé par-dessus ladite bride de raccordement. Il va de soi que lorsque l'embout terminal ne comprend pas de bride de raccordement ou s'il a été séparé de ladite bride, alors ce sont les dimensions externes du corps central d'embout qui définissent le diamètre maximum.

De même, lorsque le raidisseur est monté sur la partie courante de la conduite et fixé sur un organe de fixation intermédiaire éloigné d'un embout terminal, et si le diamètre dudit organe intermédiaire est supérieur à celui de l'embout terminal et/ou des éléments associés, alors le diamètre maximum sera celui dudit organe intermédiaire. En fait, le diamètre maximum à prendre en considération est le diamètre de l'organe de plus grandes dimensions au-dessus duquel le raidisseur doit être coulissé.

Dans tout ce qui suit on se réfère à la notion de diamètre pour des raisons de simplicité et de clarté avec l'hypothèse qu'on est en présence d'éléments cylindriques de révolution. Mais il va de soi que lesdits éléments peuvent ne pas être de révolution et les diamètres internes et/ou externes dont il est question seront les dimensions transversales internes et/ou externes desdits éléments.

Un autre avantage est qu'on élimine presque totalement les problèmes d'encombrement, de déséquilibre et de manutention pendant le transport entre l'usine de fabrication et le site de production, tout au moins ceux qui sont liés directement au(x) raidisseur(s) puisque le ou les raidisseurs ne sont plus montés, en usine, sur la conduite flexible.

Un autre avantage de la présente invention est que l'élément de support et d'appui peut constituer une pièce d'usure qu'on peut changer sans difficulté lorsqu'il se produit une usure par hydrolyse par exemple, sans nécessiter le remplacement du raidisseur proprement dit, le remplacement de l'élément de support étant particulièrement facilité lorsqu'il est constitué en plusieurs parties ou secteurs. De plus, l'élément de support et d'appui peut être monté sur la conduite flexible en usine ou sur le site d'exploitation lorsqu'il est constitué en plusieurs parties.

Un autre avantage est qu'il devient possible, en cas d'usure ou d'avarie d'un raidisseur, de le remplacer sur le site d'installation sans avoir à démonter l'embout terminal accessible depuis le support, tel qu'une plate-forme ou un navire, auquel est fixée l'extrémité de la conduite flexible. Cet avantage est particulièrement intéressant du fait que l'embout de remplacement et son montage sont très coûteux et que toute intervention de ce genre en mer aggrave considérablement les coûts normaux à cause des supports logistiques nécessaires et des arrêts de production, et aussi du fait que le changement d'embout nécessite une réduction de longueur de la conduite flexible qui peut poser problème.

Quand on souhaite dissiper la chaleur dégagée par le fluide circulant dans la conduite flexible, il est possible d'utiliser les moyens de l'art antérieur, avec l'avantage supplémentaire, conféré par la présente invention, de pouvoir les prévoir non pas dans le raidisseur, ce qui est souvent difficile en raison de la masse dudit raidisseur, mais dans l'élément de support et d'appui dont la fabrication est très simple. Les moyens de dissipation thermique, qu'ils soient par conduction avec inserts métalliques jouant le rôle de radiateur, ou par convection avec des canaux, s'adaptent très facilement à l'élément de support et d'appui. De plus, dans le cas où on utilise des rainures de circulation d'eau de mer, on peut les ménager soit sur la surface interne de l'élément de support et d'appui, de manière à refroidir, par contact direct, la peau externe de la conduite flexible, soit sur la surface externe de l'élément de support et d'appui pour à la fois refroidir la surface interne du raidisseur et la peau externe de la conduite flexible, par un choix judicieux de la matière utilisée pour la fabrication de l'élément de support et d'appui. Il n'est toutefois pas exclu de disposer de telles rainures de circulation d'eau de mer sur la surface interne du raidisseur.

Le raidisseur présentant une partie antérieure active qui accompagne la conduite flexible dans ses déformations en flexion tout en limitant l'amplitude de ces flexions, l'élément de support comporte au moins une partie antérieure sur laquelle prend appui la partie active du raidisseur dans toute sa longueur et dont l'extrémité avant se situe au moins au niveau de l'extrémité avant du raidisseur et de préférence au-delà. La partie d'extrémité antérieure de la partie active du raidisseur étant couramment de forme générale tronconique, la partie antérieure de l'élément de support peut ainsi présenter une partie d'extrémité prolongeant le raidisseur dont la surface extérieure peut être soit cylindrique soit tronconique dans le prolongement du contour extérieur du raidisseur.

Ainsi qu'il est connu, le raidisseur comporte, une partie arrière d'encastrement, de forme généralement cylindrique par l'intermédiaire de laquelle le raidisseur est fixé dans un support d'encastrement de façon à résister aux moments de flexion et aux efforts latéraux induits par les déplacements de la conduite flexible ainsi que, éventuellement, aux efforts axiaux. Le support d'encastrement peut être un organe rigide solidaire de la conduite flexible, tel que, typiquement un embout ou un collier serré autour de la conduite flexible. Dans ce cas, le raidisseur est, normalement, encastré autour du support d'encastrement ou d'un organe d'encastrement solidaire de ce dernier. Alternativement, le support d'encastrement peut être un organe rigide indépendant de la conduite flexible et disposé autour de celle-ci, tel que la partie d'extrémité d'un tube rigide. Dans ce second cas, le raidisseur est, normalement, encastré à l'intérieur du support d'encastrement. De façon typique, un jeu radial entre l'élément de support et le passage axial interne du raidisseur ou la surface extérieure de la conduite flexible permet alors à cette dernière de coulisser librement par rapport au raidisseur et au support d'encastrement.

Dans ces divers modes de réalisation, l'élément de support comporte, de préférence, une partie postérieure de fixation servant à l'immobiliser dans le sens axial de la conduite flexible. La fixation axiale de l'élément de support peut être réalisée par adhérisation avec la surface extérieure de la conduite flexible.

De préférence, on utilise un support de fixation présentant une forme générale annulaire, ou comportant plusieurs éléments assemblés autour de la conduite à la façon de segments circulaires et présentant une forme générale annulaire correspondant à la configuration de l'élément de support. Le support de fixation de l'élément d'appui peut être disposé à l'intérieur de celui-ci, et être solidaire de la conduite flexible, en particulier sous la forme d'un collier métallique ou plastique serré autour de la conduite, ou d'une portée cylindrique à la surface extérieure de l'embout. Dans le cas, en particulier, où le support d'encastrement du raidisseur est indépendant de et extérieur à la conduite flexible, le support de fixation de l'élément d'appui peut également comporter un élément faisant partie intégrante ou un organe solidaire du raidisseur ou du support d'encastrement.

L'élément d'appui peut être joint, dans sa partie postérieure au support de fixation par n'importe quel moyen de fixation connu, par exemple une simple adhérisation. Avantageusement, le blocage du support de fixation dans le sens axial de la conduite peut être réalisé grâce à des accessoires de fixation tels que des broches radiales assurant la liaison avec le support d'encastrement ou avec un organe intermédiaire. De préférence, le support de fixation comporte une portée cylindrique apte à être mise en appui sur une portée cylindrique correspondante de la partie postérieure de l'élément d'appui. En particulier, on peut utiliser des moyens de serrage radiaux qui peuvent être solidaires du support de fixation ou de l'élément d'appui, et qui sont actionnés de manière à annuler le jeu radial entre lesdites portées cylindriques d'appui et, éventuellement, à exercer un effort de serrage radial entre ces portées.

Lorsque le raidisseur est encastré sur un embout, sa partie arrière d'encastrement peut avantageusement être disposée autour d'une portée cylindrique à la surface de l'embout, si cette portée est d'un diamètre supérieur à celui de l'organe de raccordement tel qu'une bride prévue pour la connexion de la conduite à son extrémité. L'élément d'appui est alors fixé axialement à l'embout par l'intermédiaire d'un support de fixation annulaire disposé entre la surface extérieure de la conduite flexible et le raidisseur. Alternativement, lorsque l'organe de raccordement est d'un diamètre supérieur à celui du corps de l'embout qui comporte l'organe de terminaison de la conduite, la partie arrière d'encastrement du raidisseur peut se trouver disposée autour du corps de l'embout et séparée de ce dernier par un organe annulaire qui peut être le support de fixation servant à bloquer l'élément d'appui par rapport à l'embout. Le passage central axial du raidisseur présentant une surface approximativement cylindrique, le raidisseur est alors en appui, dans sa partie arrière d'encastrement, sur le support de fixation, alors que le reste du raidisseur est en appui sur l'élément d'appui.

Dans un autre mode de réalisation, en particulier lorsque le raidisseur est monté sur un support d'encastrement disposé à l'extérieur de la conduite, l'élément d'appui peut être fixé sur le support d'encastrement soit directement, soit par l'intermédiaire d'un support de fixation, le support d'encastrement pouvant comporter à cet effet une portée de fixation qui peut être cylindrique, ou conique, ou encore dans un plan perpendiculaire à l'axe de la conduite. Dans le cas de tels montages, l'élément d'appui, fixé au support d'encastrement du raidisseur, peut présenter un jeu radial par rapport à la conduite flexible, ce qui permet à cette dernière de coulisser librement dans le passage central du raidisseur.

L'élément d'appui peut consister en un organe annulaire cylindrique monobloc qui peut avoir été fabriqué séparément puis mis en place autour de la conduite flexible avant montage des embouts terminaux. Un tel élément d'appui monobloc peut également être réalisé par enroulement d'une bande ou surmoulage autour de la conduite, de sorte qu'il est alors possible de mettre en place l'élément d'appui après montage des embouts sur une canalisation flexible déjà terminée et testée, ou encore de remplacer si nécessaire un élément d'appui sur le site d'utilisation de la conduite flexible sans avoir à remplacer l'embout terminal accessible.

Selon un autre mode de réalisation particulièrement avantageux, l'élément d'appui comporte une pluralité de blocs ou secteurs aptes à être assemblés, l'ensemble ainsi réalisé ayant une forme générale approximativement annulaire cylindrique. Les bords latéraux des blocs constituant leurs surfaces d'assemblage peuvent, typiquement, former des plans radiaux passant par l'axe de la conduite flexible, ou encore alternativement, des surfaces hélicoïdales. De façon avantageuse, un léger écart sépare les bords latéraux des blocs. Le jeu circonférentiel ainsi obtenu présente une valeur choisie en fonction du diamètre de la conduite flexible, diamètre qui peut varier typiquement entre environ 30 à 50 mm et environ 500 mm. Le jeu circonférentiel total obtenu en additionnant les jeux élémentaires correspondant à chaque espace entre blocs peut ainsi varier entre environ 5 mm pour les petits flexibles et 30 à 60 mm pour les plus gros.

De façon avantageuse, l'élément d'appui présente, préalablement à sa mise en place définitive, un jeu radial par rapport à la conduite flexible et par rapport au support d'encastrement du raidisseur. Le blocage en position finale de l'élément d'appui grâce au support de fixation peut être réalisé en plaquant la partie postérieure de fixation de l'élément d'appui contre la conduite flexible et/ou le support d'encastrement de façon à annuler le jeu radial, tout en conservant de préférence un jeu radial au niveau de la partie antérieure de l'élément de support. Le jeu radial, défini par la différence des rayons des deux surfaces cylindriques en regard peut être de quelques 1/10 de mm pour les petits flexibles, et atteindre 5 à 10 mm pour les plus gros.

Lorsque l'élément d'appui est bloqué en position par un support de fixation, ce dernier peut constituer un organe monobloc annulaire et être mis en place, de même que l'élément d'appui, avant montage des embouts. Selon un mode de réalisation avantageux, le support de fixation peut être réalisé en au moins deux parties qui peuvent être amenées séparément et assemblées autour de la conduite à la façon d'un collier, de manière à pouvoir alors assurer, d'une part, la fixation de l'élément d'appui sur le support de fixation et, d'autre part, le blocage de ce dernier sur un embout et/ou sur un support d'encastrement du raidisseur extérieur à la conduite ou un organe solidaire du support d'encastrement et/ou sur la conduite flexible. L'invention concerne ainsi un procédé de mise en place de l'élément de support et du raidisseur comportant, par exemple, les étapes suivantes :
- achèvement de la fabrication de la conduite flexible,
- mise en place autour de la conduite de l'élément d'appui fabriqué préalablement,
- montage des embouts,
- essais sous pression avant embarquement de la conduite enroulée sur une bobine ou dans un panier,
- embarquement du raidisseur et du support de fixation à bord du navire de pose utilisé pour le transport et la mise en place de la conduite flexible sur le site en mer,
- mise en place du raidisseur autour de la conduite flexible, en faisant passer à travers le raidisseur un embout d'extrémité qui peut être soit l'embout de la première extrémité correspondant au début de la conduite déroulée à partir des moyens de stockage, soit l'embout de seconde extrémité,
- mise en place du support de fixation de l'élément d'appui,
- positionnement de la conduite flexible à l'intérieur du support d'encastrement du raidisseur lorsque ce dernier est du type extérieur à la conduite,
- fixation de l'élément d'appui sur son support de fixation, blocage du support de fixation sur l'embout et/ou sur la conduite flexible et/ou sur le support d'encastrement, et blocage du raidisseur sur son support d'encastrement extérieur ou sur l'embout, l'ordre de succession de ces trois opérations pouvant varier en fonction des caractéristiques de l'installation et de la procédure de mise en place de la conduite flexible.

On imaginera facilement toutes les variantes de procédure d'installation que permet l'invention, par exemple, mise en place au dernier moment, à bord du navire de pose, d'un élément d'appui réalisé en deux ou trois sections ; ou montage autour de la conduite flexible du support de fixation en fin de fabrication à l'usine avant montage des embouts.

Bien que, du fait de son encombrement et de son poids, la mise en place du raidisseur autour de la conduite flexible et la manipulation de l'ensemble constituent une opération problématique, l'invention permet d'y procéder facilement à bord du navire de pose, ou depuis le support flottant, tel qu'une plate-forme ou un navire du type FPSO, auquel est suspendue la conduite flexible utilisée en tant que riser. De la façon la plus classique, la conduite flexible est mise en place en la déroulant horizontalement au-dessus du pont du navire de pose soit à partir d'un panier de stockage, la traction étant assurée par un ou plusieurs tensionneurs linéaires multichenilles, soit à partir d'un treuil qui combine les deux fonctions de stockage et de traction, et la conduite est ensuite enroulée sur environ 90° autour d'un organe déviateur (over boarding device) tel qu'un support incurvé ou une roue pour descendre par l'extérieur de la coque vers le fond de la mer. Le raidisseur peut alors être installé soit sur la partie verticale de la conduite flexible juste en dessous de l'organe déviateur, soit sur la partie horizontale de la conduite, entre les tensionneurs et l'organe, déviateur. Dans ce dernier cas, l'opération peut être facilitée en utilisant l'un des nombreux moyens connus permettant de faire passer autour de l'organe déviateur un accessoire tel qu'un raidisseur bien que cet accessoire soit relativement rigide et de gros diamètre sur une longueur importante. On peut, par exemple, utiliser une table de manoeuvre tournant autour d'un axe horizontal tout en restant tangente au profil circulaire de l'organe déviateur. On installe le raidisseur sur la table de manoeuvre initialement horizontale de manière à pouvoir faire passer au travers du raidisseur l'embout de première extrémité, ou encore, en faisant revenir en arrière par un câble de traction l'embout de seconde extrémité, puis on bascule la table de manoeuvre pour faire descendre le raidisseur jusqu'à franchissement de l'organe déviateur.

Selon un mode de mise en oeuvre particulièrement avantageux, le flexible est posé à partir d'un dispositif connu sous le nom de VLS (Vertical Lay System) décrit dans le brevet EP 478 742.Le raidisseur peut être amené dans la tour de forage (derrick) depuis le pont du navire pour être disposé verticalement par dessous les moyens tensionneurs principaux constitués, par exemple, par une quadrichenille supportée par la tour, et dans l'axe de ces derniers, les chenilles pouvant être latéralement écartées pour laisser passer la partie supérieure du raidisseur. Il est ainsi possible soit de faire descendre à travers le raidisseur l'embout de première extrémité et la conduite flexible descendant depuis le haut de la tour, soit à la fin de la pose de la section de conduite concernée, de soulever verticalement avec un câble de traction l'embout de seconde extrémité pour le faire passer de bas en haut avec la conduite flexible à travers le raidisseur. Alternativement, il est possible, le raidisseur restant disposé sur le pont, de faire traverser son passage central par l'embout et la partie d'extrémité de la conduite flexible, cette dernière ayant été déviée de sa direction verticale dans l'axe de la tour pour passer à une direction horizontale.

De façon typique, l'élément d'appui comporte principalement une partie annulaire cylindrique en forme de manchon, réalisée en un seul bloc ou en plusieurs secteurs assemblés autour de la conduite flexible. Lorsque la conduite flexible, soumise à une charge axiale élevée, est incurvée en prenant une courbure qui est limitée en fonction de la rigidité du raidisseur à la flexion, les jeux radiaux entre l'élément d'appui et la conduite flexible et/ou le raidisseur s'annulent du côté interne, concave de la conduite flexible, qu'on peut désigner par l'intrados, la paroi de l'élément d'appui étant soumise à un effet de compression radiale plus ou moins important dans cette zone d'intrados entre le raidisseur et la conduite flexible. La propriété principale que doit présenter le matériau constituant la paroi de l'élément d'appui est de pouvoir résister à cet effet de compression, la déformation sous charge maximale devant rester compatible avec le fonctionnement du raidisseur, c'est-à-dire, inférieure à environ 5 à 10 % dans la pratique. L'élément d'appui doit, par ailleurs, présenter une flexibilité suffisante pour pouvoir accompagner la conduite flexible dans son incurvation, et être ainsi, dans le cas des applications dynamiques, apte à supporter un grand nombre de cycles alternés de traction-compression correspondant à l'alternance des positions en extrados et en intrados des diverses zones de l'élément de support.

L'élément d'appui peut comporter un organe en forme de manchon constitué d'un matériau plastique. Ce matériau peut être homogène, en particulier un thermoplastique ou un élastomère, ou cellulaire, ou encore être du type composite comportant des charges telles que des fibres courtes ou continues, ou des charges nodulaires telles que des microsphères. En fonction de la rigidité des matériaux utilisés, l'élément d'appui peut, en complément à sa fonction mécanique principale qui est de transmettre les efforts radiaux entre la conduite flexible et le raidisseur, présenter une rigidité à la flexion qui s'ajoute à celle du raidisseur et peut atteindre jusqu'à 1/4 ou 1/3 de la rigidité du raidisseur.

L'élément d'appui peut également comporter une pluralité d'anneaux rigides, par exemple métalliques, espacés dans la longueur de l'élément d'appui et noyés dans une matrice de matériau plastique.

Dans un mode de réalisation particulier, l'élément d'appui peut comporter une pluralité de pièces annulaires articulées, chaque pièce pouvant se déplacer angulairement par rapport aux deux pièces qui l'encadrent pour suivre l'incurvation de la conduite flexible, jusqu'à atteindre une butée limitant la courbure. Un tel élément d'appui fonctionne à la façon des limiteurs de courbure (définis comme "bend limiters" dans API R.P. 17 B) composés couramment d'éléments tels que des vertèbres. Les pièces annulaires articulées peuvent avoir des sections en forme de U enchevêtrées tête-bêche, ou en forme de Z avec deux portées circulaires de diamètres différents, ou encore, par exemple, comporter des portées formant rotule.

D'autres avantages et caractéristiques ressortiront mieux à la lecture de la description de plusieurs modes de réalisation de l'invention, ainsi que des dessins annexés sur lesquels :
- la figure 1 est une vue en coupe longitudinale partielle d'une conduite flexible munie du dispositif selon l'invention, le raidisseur étant monté sur un embout terminal,
- les figures 2 et 3 sont des vues en coupe transversale selon II-II de la figure 1 suivant deux modes de réalisation des moyens de dissipation thermique,
- la figure 4 est une vue d'un élément de support et d'appui avec d'autres moyens de dissipation thermique,
- la figure 5 est une section schématique d'un élément de support et d'appui en plusieurs parties,
- la figure 6 est une vue partielle en coupe longitudinale d'une conduite flexible munie du dispositif selon l'invention, le raidisseur étant monté à distance d'un embout terminal,
- les figures 7 à 21 sont des vues schématiques en coupe des moyens de liaison et des moyens d'encastrement du raidisseur et prévus dans le dispositif selon l'invention.

Dans la description qui suit il est fait mention d'une conduite flexible munie d'un embout terminal, mais il est entendu que la présente invention s'applique aux conduites flexibles ayant deux embouts terminaux. De même, la présente invention peut être mise en oeuvre, à n'importe quel endroit de la conduite flexible où il est nécessaire de limiter la courbure.

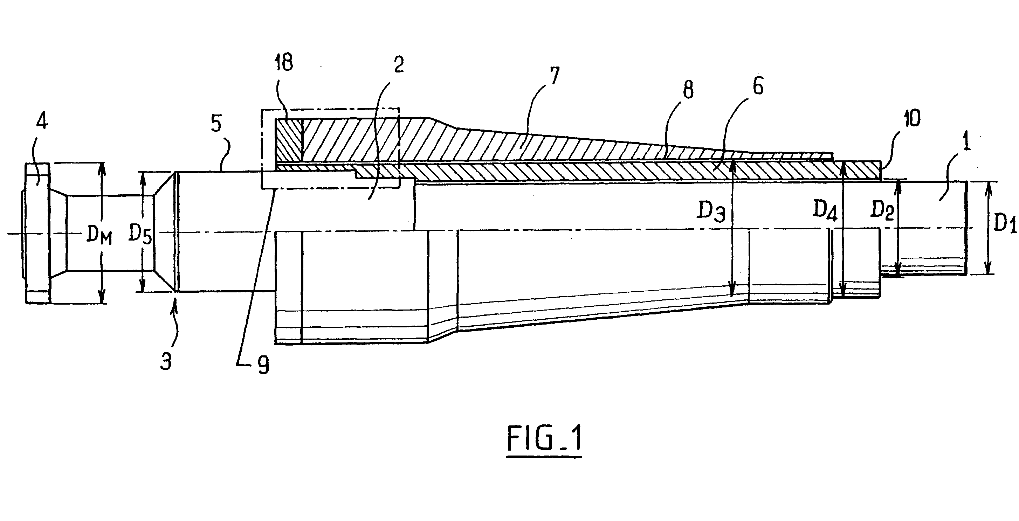

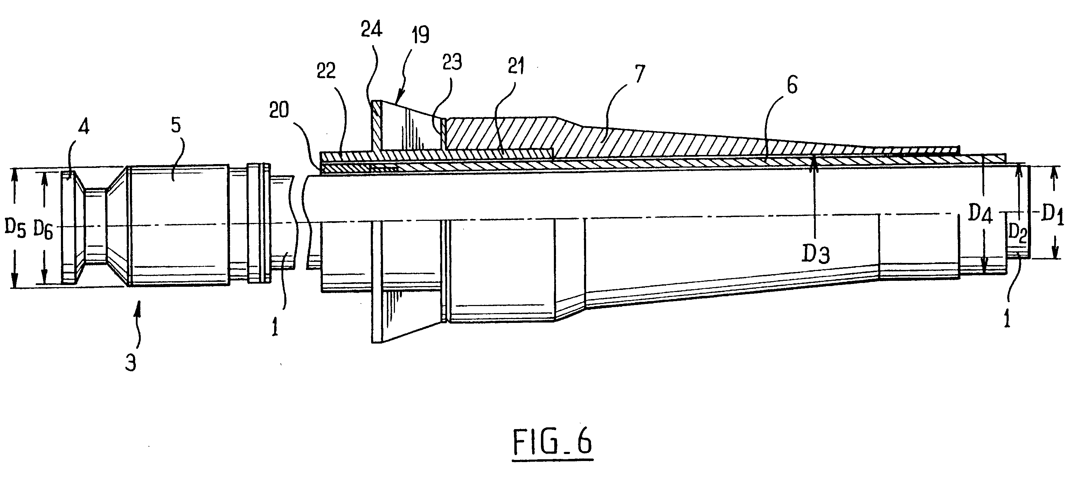

Sur la figure 1, on a représenté une conduite flexible 1 dont une extrémité 2 est reliée à un embout terminal 3. Dans l'exemple représenté, l'embout terminal 3 comprend une bride de connexion 4 qui présente des dimensions externes supérieures à celles du corps principal 5 et elle est considérée comme étant la partie de diamètre maximum D_{M}. Ainsi que cela fut rappelé précédemment, si la bride 4 était plus petite, comme cela est représenté sur la figure 6, c'est le corps 5 de l'embout 3 qui serait considéré comme présentant le diamètre maximum.

Un élément de support et d'appui 6 est disposé autour de la conduite flexible 1 qui présente dans sa partie courante un diamètre extérieur prédéterminé, par exemple D₁. L'élément de support et d'appui présente un diamètre intérieur D₂ qui est sensiblement égal à D₁, de manière à être appliqué avec serrage sur la conduite flexible 1 après qu'il a été mise en place dans la position désirée.

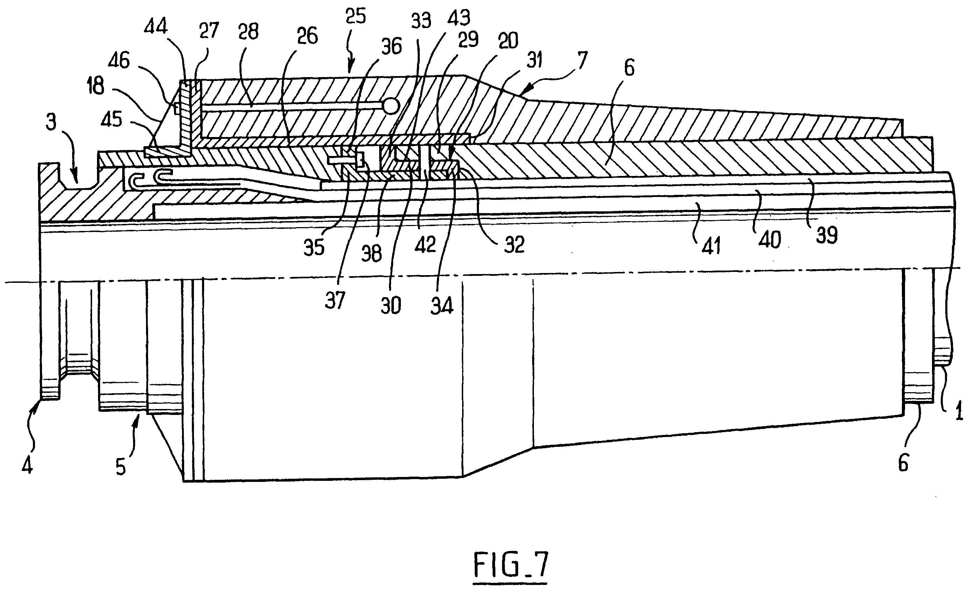

Un raidisseur 7 dont la structure est bien connue et décrite dans les documents cités précédemment, comprend un passage central traversant 8 dont le diamètre D₃ est légèrement supérieur au diamètre D_{M} pour pouvoir coulisser sur la bride de connexion 4 et être amené en position après montage de l'embout 3 sur la conduite flexible 1. En l'absence de contraintes, le diamètre D₃ du passage central 8 est, de même, légèrement supérieur au diamètre extérieur D₄ de l'élément 6 de manière à ce que, lorsque la courbure de la conduite est faible ou nulle, il est possible de faire coulisser le raidisseur 7 pour l'amener dans la position désirée autour de l'élément 6. Avantageusement, les diamètres D₁, D₂, D₃ et D₄ sont choisis de sorte que les rapports (D₂ - D₁)/D₂ et (D₃ - D₄)/D₄ soient inférieurs ou égaux à 5/100. De façon typique, l'embout 3 est relié de façon fixe à un support tel qu'une plate-forme, un navire ou une structure sous-marine, et raccordé à l'extrémité d'une canalisation solidaire de ce support. Sous l'effet combiné de la traction dans la conduite flexible et de la déviation angulaire de cette dernière par rapport à l'axe de l'embout, la conduite flexible 1 et le raidisseur 7 sont incurvés, en même temps que l'élément 6, en prenant une courbure limitée par la réaction opposée par le raidisseur, l'incurvation pouvant être cycliquement alternée en sens opposés dans le cas des applications dynamiques. A cet effet, l'élément 6 comporte au moins une partie déformable en flexion qui s'étend sur une longueur de la conduite flexible comprise au moins entre la partie arrière et l'extrémité avant du raidisseur 7. Le raidisseur 7, dans une telle situation de travail est supporté et en appui continu dans sa partie en intrados sur l'élément 6, de sorte que ce dernier peut être comprimé par ledit raidisseur 7. L'élément 6, le raidisseur 7 et l'embout 3 sont reliés entre eux par des moyens de liaison comportant les organes d'encastrement du raidisseur dont divers modes de réalisation sont décrits dans les documents de l'art antérieur cités ci-dessus, ainsi que le support de fixation de l'élément 6. Lesdits moyens de liaison sont représentés en figure 1 de façon schématique et symbolique à l'intérieur du bloc représenté en pointillés et référencé 9, des exemples de réalisation particuliers étant illustrés notamment sur les figures 7 à 21.

Le raidisseur 7 qui est adapté aux conditions ambiantes dans lesquelles travaille la conduite flexible 1, présente des dimensions, et en particulier une longueur, qui sont déterminées en fonction du diamètre extérieur D₁ de la conduite flexible 1 et des conditions d'utilisation, en particulier la traction dans la conduite flexible et la valeur maximale que peut atteindre l'angle qu'elle fait dans sa partie approximativement rectiligne au-delà du raidisseur par rapport à l'axe de l'embout 3. La partie antérieure de l'élément 6, du côté opposé à l'embout 3, s'étend de façon continue sur toute la longueur du raidisseur 7, l'extrémité avant de l'élément 6 étant de préférence en dépassement de l'extrémité avant du raidisseur 7 en formant l'extrémité libre 10.

Lorsque le raidisseur 7 est monté sur la partie d'extrémité de la conduite flexible 1 raccordée à un embout, sa partie arrière d'encastrement est de préférence disposée autour d'au moins la partie antérieure du corps principal 5 de l'embout. La figure 1 illustre un tel cas lorsque, par ailleurs, le diamètre maximum D₅ du corps principal 5 de l'embout 3 est inférieur au diamètre de la bride 4 constituant l'organe de raccordement de l'embout. Dans ce cas, la partie arrière de l'élément 6, de préférence en combinaison avec un support de fixation dudit élément dont il est le prolongement à l'arrière, présente une surface extérieure cylindrique ayant le même diamètre D₄ que la partie antérieure de l'élément 6 et s'étendant sur toute la longueur du raidisseur 7 et des organes d'encastrement 18 du raidisseur. Dans le cas où le diamètre D₅ du corps principal 5 de l'embout est supérieur ou égal au diamètre de l'organe de raccordement de l'embout, la partie arrière d'encastrement du raidisseur 7 est, de façon avantageuse, directement en appui sur la surface extérieure cylindrique du corps principal 5 de l'embout. L'élément 6, de préférence en combinaison avec un support de fixation, présente alors une surface extérieure cylindrique dont le diamètre D₄ est approximativement égal au diamètre D₅ du corps principal de l'embout, de telle sorte que l'ensemble formé par le corps principal de l'embout et l'élément 6 constitue une surface d'appui cylindrique pour supporter le raidisseur 7 dans toute sa longueur, avec une éventuelle interruption entre le support de fixation de l'élément 6 et le corps principal de l'embout 5 ou à l'endroit du support de fixation.

Le choix des matériaux pour le raidisseur 7 et l'élément 6 doit tenir compte des spécificités de chacun d'entre eux.

Selon un mode de réalisation particulièrement simple et économique, on peut obtenir un excellent résultat en fabricant l'élément 6 en un matériau plastique homogène, compact et sans charge. Le corps du raidisseur 7 pouvant consister, de la même façon, en un simple volume de matériau plastique ou encore pouvant comporter une armature interne plus
ou moins rigide, le matériau de l'embout de support peut être identique au matériau plastique du raidisseur, par exemple de l'Adiprène L167 de dureté 95 Shore A et de module d'Young de 70 MPa ou de l'Adiprène L100 de dureté 90 Shore A et de module d'Young 50 MPa. Pour de gros raidisseurs, il peut être envisagé d'utiliser un matériau dur dont la dureté est de 60 Shore D et le module d'Young de 140 MPa, le matériau utilisé pour l'élément de support et d'appui 6 pouvant être l'Adiprène L167 ou L100 de dureté inférieure.

Les matériaux Adiprène L167 et L100 sont des nuances particulières de polyuréthane, ADIPRENE® étant une marque de UNIROYAL. D'autres matériaux plastiques, en particulier élastomériques ou thermoplastiques, sont utilisables, par exemple du polyéthylène, du polypropylène, du PVC.

Il est également possible de réaliser l'élément de support et d'appui dans un matériau qui soit sensiblement plus souple et élastique que celui du raidisseur à condition que l'écrasement du matériau utilisé ne dépasse pas quelques pour cent, 5 à 10 % au maximum, sous une pression de 10 bars.

Le passage traversant 8 du raidisseur peut ne pas être tout à fait cylindrique pour des commodités de démoulage et il est, en conséquence, légèrement conique, la conicité étant de 1 à 3‰. Elle est alors utilisée pour centrer l'élément de support et d'appui par rapport au raidisseur.

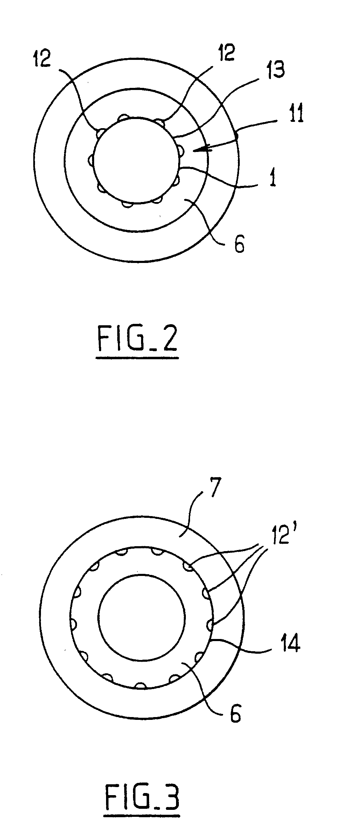

Sur les figures 2 à 4 sont représentés très schématiquement des moyens de refroidissement ménagés sur l'élément de support et d'appui 6. D'une façon générale, ces moyens de refroidissement peuvent être constitués par des passages tels que des canaux pratiqués dans la paroi de l'élément 6 ou à sa surface et permettant la circulation de l'eau de mer dans la longueur de l'élément 6.

Les premiers moyens 11 (figure 2) sont constitués par des rainures 12 ménagées sur la face interne 13 de l'élément de support et d'appui 6, qui est en regard de la face externe du flexible 1, le fluide de refroidissement circulant dans lesdites rainures 12 et refroidissant directement la peau externe de ladite conduite flexible ainsi que, au moins partiellement, l'intérieur du raidisseur 7 dans la mesure où l'épaisseur de l'élément 6 n'est pas très importante.

Les deuxièmes moyens sont identiques à ceux de la figure 2, à la différence que des rainures de refroidissements 12' sont ménagées sur la face externe 14 de l'élément de support et d'appui 6, qui est en regard de la face interne du raidisseur 7 (figure 3). Avec des rainures 12', le raidisseur 7 est refroidi directement, ainsi que la conduite flexible 1 au moins partiellement pour autant que l'épaisseur de l'élément de support et d'appui (6) ne soit pas très importante.

Il est également possible de combiner des rainures 12 illustrées en figure 2 et les rainures 12' illustrées en figure 3.

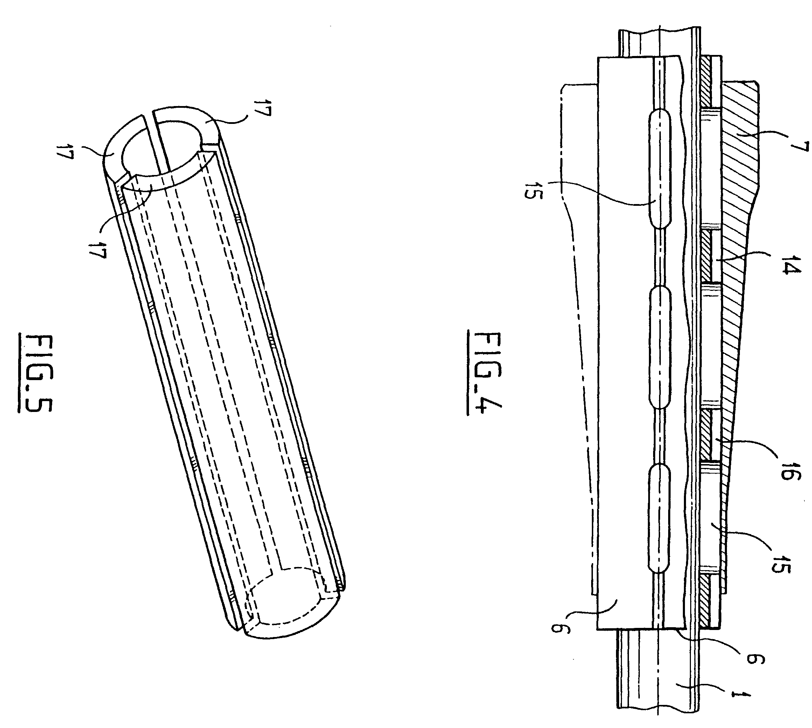

Dans le troisième mode de réalisation de la figure 4, les moyens de refroidissement sont constitués par des ouvertures allongées 15 ménagées dans l'élément de support et d'appui 6 et traversant la paroi de l'élément 6 dans toute son épaisseur, lesdites ouvertures 15 communiquant entre elles par des passages 16. Les ouvertures 15 permettent un refroidissement efficace du raidisseur 7 et de la conduite flexible 1.

Les rainures 12 ou 12', ou encore les ouvertures 15 et les passages 16 peuvent être orientés longitudinalement, parallèlement à l'axe de la conduite flexible. Ils peuvent également avoir une forme générale hélicoïdale.

L'élément de support et d'appui 6 peut être réalisé en une seule pièce, comme représenté sur la figure 1 ou en plusieurs secteurs. Sur la figure 5, il est représenté un élément de support et d'appui 6 par exemple en trois blocs distincts constitués par trois secteurs identiques 17 qui forment, une fois assemblés autour de la conduite flexible 1, une structure annulaire cylindrique. Cela permet une mise en place in situ sur le lieu d'installation et d'utilisation de la conduite flexible et de pouvoir procéder au remplacement in situ de l'élément 6 en cas d'usure ou d'avarie. Dans le cas des flexibles de diamètre important, nécessitant un élément de support 6 de diamètre et de longueur considérables, cela permet, de plus, de réduire les coûts de fabrication en réduisant les dimensions en section de la pièce à fabriquer. Par ailleurs, le jeu circonférentiel qui peut être réalisé entre les différents blocs peut être déterminé de façon à favoriser la mise en place et le bon fonctionnement du dispositif. En outre, la manutention et le transport de la conduite flexible sont facilités du fait que la conduite est nue, sans élément 6 déjà monté. De même, il est possible de réaliser des éléments de support et d'appui 6 par assemblage de blocs fabriqués dans des dimensions différentes. Bien entendu, l'élément de support et d'appui 6 pourrait être réalisé en deux parties semi-cylindriques ou en des secteurs dont le nombre est supérieur à 3.

Sur la figure 6, on a représenté un raidisseur 7 avec l'élément de support 6, disposés autour de la conduite flexible 1 à distance de l'embout terminal 3. Le raidisseur 7 est fixé rigidement sur un support d'encastrement 19 ou sur des organes d'encastrement solidaires d'un tel support, le support d'encastrement étant solidaire d'une structure marine telle qu'une plate-forme fixe ou flottante, un navire, ou une structure sous-marine telle qu'une bouée ou une structure immergée fixe. Le support d'encastrement 19 peut se trouver à proximité immédiate de l'embout terminal 3, mais il est normalement éloigné de l'embout d'une distance qui peut être de plusieurs dizaines ou plusieurs centaines de mètres. Selon un mode d'utilisation particulièrement intéressant, l'embout 3 est disposé de façon accessible sur une plate-forme ou un navire ou dans la partie haute d'un caisson ("turret") autour duquel un navire peut tourner librement tout en restant ancré à partir du caisson, ou en restant immobilisé par positionnement dynamique, le flexible 1 descendant au départ de l'embout 3 à travers la structure marine selon une direction verticale ou oblique. Le support d'encastrement 19 est fixé sur la structure marine à l'endroit où la conduite flexible 1 sort de la partie basse de la structure marine pour traverser la tranche d'eau en direction du fond, en présentant typiquement une configuration en chaînette.

Dans le but d'assurer de façon pratique et efficace la liaison entre l'élément d'appui 6, le raidisseur 7 et le support d'encastrement 19 du raidisseur, le dispositif comporte avantageusement un support de fixation 20 de l'élément d'appui 6 qui est, d'une part, disposé à l'arrière et rendu solidaire de l'élément de support 6 et, d'autre part, fixé, de préférence, sur le support d'encastrement 19, ou éventuellement sur la conduite flexible 1.

Lorsque l'opération de mise en place de l'ensemble est terminé, la conduite flexible 1 peut se trouver solidarisée avec l'élément de support 6 et le support de fixation 20. Alternativement, le dispositif selon l'invention permet, avantageusement, de laisser à la conduite flexible 1 la possibilité de coulisser axialement par rapport au raidisseur 7 et au support d'encastrement 19. De préférence, le coulissement est rendu possible par un jeu radial entre la conduite flexible 1 de diamètre extérieur D₁ d'une part et, d'autre part, l'ensemble constitué par le support de fixation 20 et l'élément de support 6 de diamètre intérieur D₂, le support de fixation 20 étant alors solidaire du support d'encastrement 19 et indépendant de la conduite flexible. Alternativement, le coulissement peut être obtenu par un jeu radial entre le support de fixation 20 et l'élément de support 6 de diamètre extérieur D₄ d'une part et, d'autre part, le support d'encastrement 19 et le raidisseur 7 de diamètre intérieur D₃, le support de fixation 20 étant alors solidaire de la conduite flexible 1.

Le support d'encastrement 19 est une pièce rigide résistante, typiquement en acier, comportant une partie centrale cylindrique dont la surface intérieure présente un diamètre légèrement supérieur au diamètre extérieur D₄ de l'élément d'appui 6 et constitue le prolongement du passage interne axial de la partie antérieure dite active du raidisseur 7. La partie cylindrique du support 19 comporte une portion antérieure 21 dont la surface extérieure constitue une surface d'appui pour la partie arrière d'encastrement du raidisseur 7 et s'étend sur une longueur suffisante pour assurer correctement le positionnement et l'encastrement relatifs de la conduite flexible 1 et du raidisseur 7 à travers l'élément de support 6. De préférence, ainsi qu'il est illustré sur la figure 6, ladite partie cylindrique du support d'encastrement 19 comporte, en outre, une portion postérieure 22 dont la surface intérieure constitue une surface d'appui pour le support de fixation 20 de l'élément 6. Des accessoires de fixation tels que des broches radiales assurent le blocage en particulier dans le sens axial, du support de fixation 20 de l'élément 6 par rapport au support d'encastrement 19. L'encastrement du raidisseur sur le support 19 est, de préférence, consolidé en bloquant et en fixant, par des moyens connus, l'arrière du raidisseur 7 sur le support 19 par des moyens de fixations connus, tels qu'illustrés schématiquement sur la figure 6 sous la forme d'une bride 23 solidaire du support 19.

Par ailleurs, le support d'encastrement 19 comporte dans sa partie périphérique, illustrée symboliquement sur la figure 6 par la bride 24, des zones ou des organes de fixation (non illustrés) permettant de la fixer de façon rigide à la structure marine par l'intermédiaire de moyens d'assemblage mécanique connus tels que vis, boulons, colliers articulés, loquets, etc.

Le support d'encastrement 19 peut être réalisé en plusieurs blocs qui peuvent être assemblés autour de la conduite flexible 1 à la manière d'un collier segmenté. Alternativement, le support 19 peut être monobloc, le diamètre interne de sa partie cylindrique étant légèrement supérieur au diamètre maximum D_{M} de l'embout terminal autour duquel doit passer le raidisseur 7. Dans le cas de la figure 6, ce diamètre D_{M} est égal au diamètre D₅ du corps principal de l'embout 3, le diamètre D₆ de la bride 4 étant inférieur au diamètre D₅.

L'opération d'installation de la conduite flexible 1 et de l'ensemble comportant le raidisseur 7 et l'élément de support 6 ainsi que la fixation sur le support d'encastrement et la structure marine peuvent être réalisés, par exemple, de la façon suivante :
- dans une première étape, la conduite flexible 1 étant stockée sur une bobine ou dans un panier à bord d'un navire de pose, son extrémité libre terminée par l'embout 3 est déroulée dans le but de mettre en place le raidisseur 7 avant de poursuivre l'opération de pose de la conduite flexible en la déroulant dans une étape ultérieure jusqu'à réaliser la connexion dite de première extrémité avec la structure marine à raccorder. Pour réaliser cette première étape, on commence par mettre en place autour de l'extrémité libre de la conduite flexible, l'élément de support 6 et/ou son support de fixation 20 s'ils n'ont pas été montés d'origine en usine. On peut alors, ainsi qu'il a été décrit plus haut, faire passer le raidisseur 7 autour de l'embout 3 et de l'extrémité de la conduite flexible de manière à ce qu'il se trouve en place autour de l'élément de support 6 et de son support de fixation 20, le diamètre intérieur D₃ du raidisseur étant légèrement supérieur au diamètre extérieur D₄ de l'élément de support et de l'élément 6. Cette opération préalable de montage est complétée en mettant en place le support d'encastrement 19, la portion antérieure 21 de sa partie centrale cylindrique étant emmanchée à l'intérieur de la partie antérieure d'encastrement du raidisseur 7 et à l'extérieur de l'élément de support 6, et la portion postérieure 22 étant disposée autour du support de fixation 20. Le diamètre de la partie interne cylindrique 21-22 étant de préférence supérieur au diamètre maximum D_{M} de l'embout, l'ensemble comportant le raidisseur 7 et le support de fixation 19 peut être monté et assemblé de façon solide séparément, avant de le faire passer autour de l'embout 3. Dans un mode de réalisation avantageux les deux ensembles comprenant l'un le raidisseur 7 et son support d'encastrement 19 et, l'autre, l'élément de support 6 et son support de fixation 20 sont alors assemblés entre eux et fixés l'un à l'autre par blocage du support de fixation 20 sur la portion cylindrique 22, le support de fixation 20 et l'élément de support ayant la possibilité de coulisser ensemble le long de la conduite flexible 1.

De façon connue, telle que décrite dans le brevet EP 565 445, le dispositif ainsi réalisé par l'assemblage desdits deux ensembles est alors immobilisé provisoirement à l'endroit prévu sur la conduite flexible 1. L'immobilisation dudit dispositif peut être réalisée en le reliant à un collier serré sur la conduite flexible 1 ou à l'embout 3 par des moyens de solidarisation provisoire qui peuvent être rompus où relâchés de diverses façons, en particulier par rupture sous l'effet d'une traction suffisamment élevée exercée sur la conduite flexible ou par des moyens mécaniques quelconques agissant directement sur les moyens de solidarisation provisoire et actionnés par télécommande ou par plongeur ou à partir d'un ROV (Remote Operated Vehicle).

L'étape suivante consiste à dérouler la conduite flexible 1 à partir du navire de pose par la procédure dite de "pull-in", l'embout 3 étant, typiquement, connecté à un câble de manoeuvre, actionné à partir d'un treuil installé sur la structure marine à laquelle l'embout 3 doit être raccordé. L'embout 3 parvient ainsi dans une ouverture de la partie basse de la structure marine, avantageusement équipée de moyens de guidage tels qu'un organe en forme de trompette (bell mouth). On peut ensuite continuer à agir sur le câble pour tirer la conduite pour la faire pénétrer plus ou moins à l'intérieur de la structure marine, jusqu'à ce que le support d'encastrement parvienne en présence de ladite ouverture de la partie basse de la structure marine. Selon un mode de réalisation avantageux, les dimensions en largeur hors-tout du support d'encastrement 19 (telles que le diamètre extérieur de la bride 24 dans la représentation schématique et symbolique de la figure 6) sont plus importantes que les dimensions radiales de l'orifice de passage délimitant l'ouverture de la partie basse de la structure marine. Le support de fixation 20 se trouve ainsi immobilisé sur la paroi annulaire délimitant ladite ouverture, des portées respectivement complémentaires, typiquement radiales ou coniques, étant alors en appui l'une contre l'autre sous l'effet de la traction exercée sur le câble de manoeuvre. Des moyens de verrouillage sont alors actionnés pour bloquer directement le support d'encastrement 19 dans l'ouverture de la structure marine. Les moyens de solidarisation provisoire sont alors rompus ou relâchés, ce qui libère la conduite flexible 1 par rapport au dispositif d'encastrement comprenant le raidisseur 7, l'élément de support 6, le support de fixation 20 et le support d'encastrement 19, ce dispositif d'encastrement étant dorénavant rendu solidaire de la structure marine.

L'opération de mise en place par traction de la première extrémité de la conduite flexible 1 se termine par la connexion de l'organe de raccordement 4 de l'embout 3 avec l'extrémité correspondante d'une canalisation solidaire de la structure marine.

L'opération de pose de la conduite flexible 1 peut alors se poursuivre en continuant de la dérouler à partir du navire de pose qui s'éloigne de la structure marine au fur et à mesure que, d'une façon typique, la conduite flexible est posée sur le fond.

Les figures 7 à 21 illustrent divers exemples particuliers de réalisation d'un dispositif d'encastrement selon l'invention.

Dans le cas des figures 7, 8 et 9, l'embout terminal 3 constitue le support d'encastrement sur lequel est monté le raidisseur 7.

La figure 7 illustre un cas où le diamètre maximum D_{M} de l'embout 3 est égal au diamètre D₅ du corps principal 5 de l'embout. Dans la partie postérieure d'encastrement 25 du raidisseur 7, le passage central 8 est délimité par une paroi cylindrique rigide 26 de préférence métallique. Le raidisseur 7 comporte en outre, de façon également connue, une paroi postérieure rigide, constituée par une plaque métallique radiale annulaire 27 qui est solidaire de la paroi cylindrique interne 26, ainsi que d'une armature interne 28 noyée dans le matériau élastomèrique du raidisseur.

Dans le mode de réalisation avantageux illustré par la figure 7, l'élément de support 6 comporte une partie d'extrémité arrière 29 également cylindrique mais d'épaisseur plus faible que la partie principale de l'élément 6. A l'extérieur, ladite partie d'extrémité 29 est en appui sur le raidisseur dans la zone où ce dernier est rendu rigide par la paroi cylindrique métallique 26. A l'intérieur, la partie d'extrémité 29 est en appui sur une partie médiane cylindrique 30 du support de fixation 20, de sorte que la partie d'extrémité 29 de l'élément 6 est tenue entre la paroi 26 du raidisseur 7 et la partie médiane 30 du support 20. La paroi métallique 26 se trouvant ainsi en appui sur le corps principal 5 de l'embout et sur la partie d'extrémité 29 de l'élément de support 6, elle est avantageusement prolongée vers l'avant de sorte que son extrémité antérieure 31 se trouve en avant de l'extrémité antérieure 32 du support de fixation 20. Les moyens assurant le blocage de l'extrémité arrière 29 de l'élément 6 sont avantageusement complétés par deux éléments annulaires radiaux du support de fixation 20, situés de part et d'autre de sa partie médiane 30, l'un des éléments radiaux 33 étant à l'arrière et tourné vers l'extérieur, et formant butée axiale pour la partie d'extrémité 29 de l'élément 6, et l'autre élément radial 34 étant à l'avant et tourné vers l'intérieur, de sorte que le support de fixation 20 présente une section en forme de S ou de Z.

Le support de fixation 20 est monté sur l'embout 3 par l'intermédiaire d'une pièce de liaison 35 constituée par un anneau métallique comportant, d'une part, une portée radiale 36 en appui sur une portée frontale correspondante du corps principal 5 de l'embout et fixée à ce dernier par des moyens tels qu'une pluralité de vis ou boulons 37, et d'autre part, une partie cylindrique 38. Dans le but de consolider le centrage axial du raidisseur 7 et de l'élément de support 6 par rapport à la conduite flexible 1, par l'intermédiaire du support de fixation 20, la partie cylindrique 38 est en appui radial, d'une part par sa surface extérieure sur la partie cylindrique 30 du support de fixation 20, et d'autre part, par sa surface intérieure sur la surface extérieure de la conduite flexible 1 dont la paroi est illustrée schématiquement avec une gaine extérieure 39, une armure 40 et une partie intérieure 41. Le support de fixation 20 est fixé axialement sur l'embout 3 par l'intermédiaire de la pièce de liaison 35 grâce à des accessoires de fixation tels que des broches radiales 42. La fixation axiale de l'élément de support d'appui 6 peut être réalisée par les broches 42, mais elle peut avantageusement être consolidée par adhérisation de l'interface 43 de la partie arrière de l'élément de support 6, en appui sur la partie cylindrique d'extrémité 30 du support 20.

Le raidisseur 7 est, par ailleurs, bloqué sur l'embout 3, de façon connue, par un organe d'encastrement constitué par une bride métallique 18 qui comporte une partie en forme de plaque radiale annulaire 44 en appui sur la paroi postérieure rigide 27 du raidisseur 7 et une partie cylindrique 45 en appui sur le corps principal de l'embout. Dans l'exemple illustré en figure 7, la fixation axiale est réalisée par des moyens tels que des écrous ou boulons 46 bloquant l'extrémité libre de l'armature 28 sur la partie radiale 44 et par encastrement de la partie cylindrique 45 dans une gorge 47 pratiquée dans la surface extérieure du corps principal 5 de l'embout. La bride 18 est réalisée en au moins deux parties, à la façon d'un collier segmenté, de manière à pouvoir être mise en place autour de l'embout 3 après que le raidisseur 7 a été passé autour de l'embout et de l'élément de support 6. La partie cylindrique 45 de la bride 18 étant ainsi logée dans la gorge 47, la bride est alors assemblée solidement, par boulonnage par exemple. L'opération est terminée en reculant le raidisseur jusqu'au contact entre les plaques radiales annulaires 27 et 44 et en fixant le raidisseur avec les moyens de fixation axiale 46.

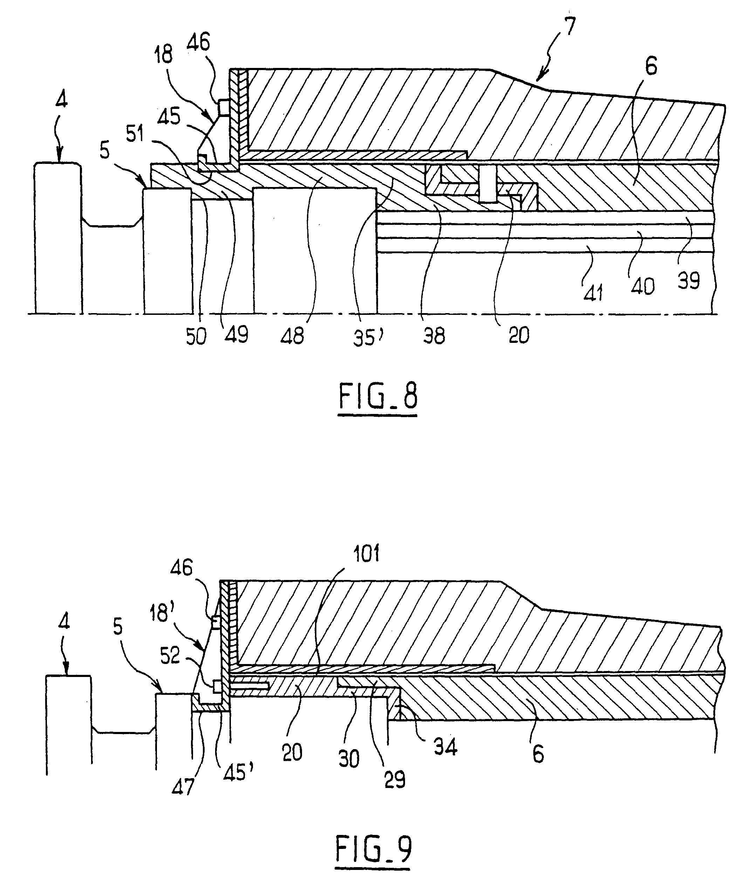

Dans le cas des exemples illustrés sur les figures 8 et 9, le raidisseur est monté sur un embout dont le corps principal 5 présente un diamètre extérieur D₅ inférieur au diamètre D₆ de la bride 4.

Le dispositif de montage du raidisseur et de son élément de support illustré sur la figure 8 comporte une pièce de liaison 35' comportant une partie cylindrique antérieure 38 en appui sur la conduite flexible 1, de même que dans le cas de l'exemple illustré par la figure 7. La pièce de liaison 35' comporte, en outre, une partie postérieure de révolution 48 dont la surface intérieure est en appui sur le corps principal d'embout 5 et dont la surface extérieure a un diamètre correspondant au diamètre extérieur D₄ de l'élément de support 6, légèrement supérieur au diamètre D₆ de la bride 4, le raidisseur 7 étant en appui, de l'arrière vers l'avant, sur la pièce de liaison 35' et sur l'élément de support 6. La pièce de liaison est réalisée en au moins deux parties aptes à être assemblées autour du corps 5 de l'embout, le blocage axial étant assuré par la pénétration d'une saillie 49 de la partie postérieure 48 dans une gorge 50 du corps principal 5 de l'embout. La pièce de liaison 35' assure ainsi le blocage axial du support de fixation 20 auquel il est lié par des broches 42. La fixation du raidisseur 7 sur l'embout 3 est assurée par l'intermédiaire de la pièce de liaison 35'. A cette fin, la bride 18 réalisée en au moins deux éléments assemblables est, d'une part, solidarisée du raidisseur 7 par les moyens 46 et, d'autre part, immobilisée sur la pièce de liaison 35' par la pénétration d'une partie annulaire en relief 45 dans une gorge 51 à la surface de la pièce 35'.

Le dispositif illustré sur la figure 9 ne comporte pas de pièce de liaison telle que les pièces 35 ou 35', le blocage du support de fixation 20 sur l'embout étant assuré par l'intermédiaire d'un organe d'encastrement tel qu'une bride 18' réalisée en au moins deux parties assemblables autour de l'embout sur lequel elle est immobilisée par pénétration d'une partie cylindrique interne 45' dans une gorge 47 à la surface du corps principal 5 de l'embout. Le support de fixation 20 est fixé à la bride 18' par des moyens 52 tels que des vis, le raidisseur 7 étant également fixé à la même bride 18' par des moyens 46 déjà décrits.

Le support de fixation 20 présentant un élément radial frontal 34 en appui axial sur la portée périphérique antérieure du corps principal 5 de l'embout, on notera que, contrairement aux exemples des figures 7 et 8, la partie d'extrémité 29 de l'élément 6 se trouve ici en appui radial sur le corps 5 par l'intermédiaire de la partie médiane cylindrique 30 du support de fixation 20.

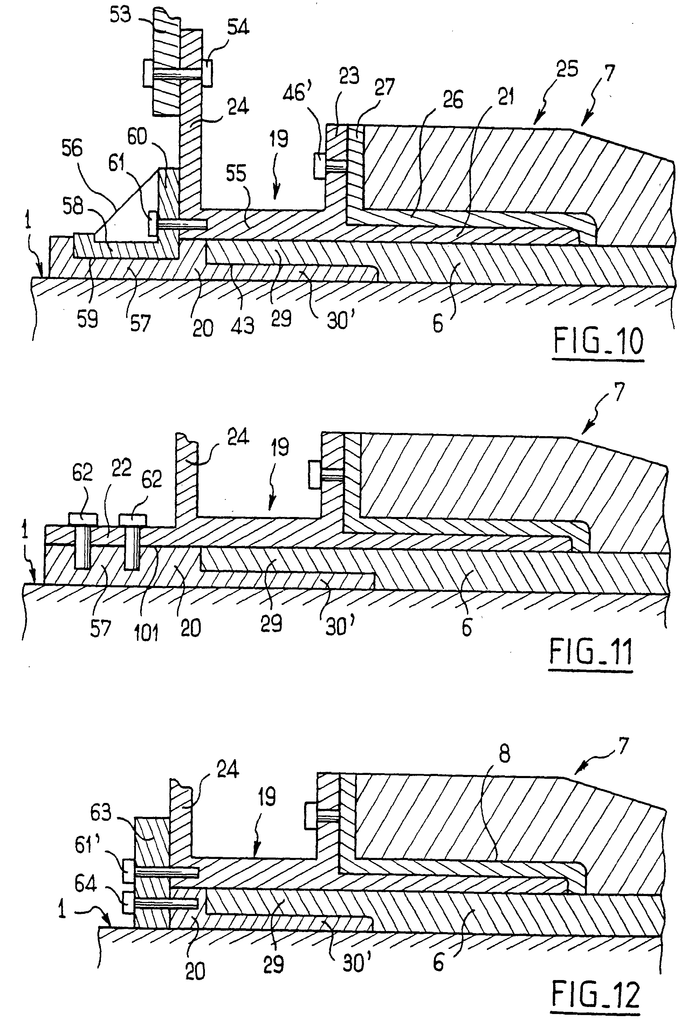

Les figures 10 à 16 illustrent divers exemples de montage du raidisseur 7 sur une structure marine réalisés de sorte que la liaison entre le raidisseur 7 et la conduite flexible 1 soit faite par l'intermédiaire d'un élément de support 6 selon l'invention. La structure marine est représentée schématiquement par les bords 53 de l'ouverture dans la structure marine, ouverture sur laquelle doit être fixé le raidisseur et à travers laquelle doit passer la conduite flexible 1. Le raidisseur est fixé sur les bords 53 de l'ouverture par l'intermédiaire d'un support d'encastrement 19 qui est réalisé sous la forme d'une pièce de révolution rigide 19 comportant des brides 23 et 24 respectivement fixées au raidisseur 7 et aux bords 53 de l'ouverture par des moyens 46' et 54 tels que des vis ou des boulons.

Les figures 10 à 13 illustrent des dispositifs où l'élément de support 6 est fixé à l'intérieur du support d'encastrement, en particulier dans le sens axial, la conduite flexible 1 pouvant être libre de coulisser axialement par rapport à l'élément de support 6.

Dans le cas des figures 10, 11 et 12, le support d'encastrement 19 comporte une partie cylindrique dont la surface interne est dans le prolongement de la surface interne du passage 8 à l'intérieur du raidisseur et est en appui sur l'élément de support 6. Ladite partie cylindrique comporte une portion centrale 55 entre les brides 23 et 24 qui est en appui sur la partie d'extrémité arrière 29 de l'élément de support 6. Dans la partie postérieure d'encastrement 25 du raidisseur 7, la surface du passage central 8 est délimitée par un élément cylindrique rigide 26 intégré au raidisseur dont le diamètre intérieur est supérieur au diamètre D₃ du raidisseur, de sorte que la partie cylindrique du support d'encastrement comporte une portion antérieure 21 disposée dans l'espace annulaire entre l'élément de support 6 et l'élément rigide 26, cette disposition ayant pour effet de renforcer l'encastrement du raidisseur 7 sur le support d'encastrement 19.

Par ailleurs, l'élément de support 6 est fixé au support d'encastrement 19 par l'intermédiaire du support de fixation 20, la partie d'extrémité arrière 29 de l'élément de support étant en appui interne sur une partie cylindrique 30' constituant la zone antérieure du support de fixation 20. L'élément de support 6 est retenu axialement par rapport au support de fixation 20 par tout moyen connu, par exemple, de façon simple et avantageuse, par adhérisation de l'interface 43 entre la partie arrière 29 de l'élément 6 et la partie cylindrique antérieure 30' du support de fixation 20.

Le centrage de la conduite flexible 1 par rapport au raidisseur 7 et au support d'encastrement 19 étant principalement assuré par l'élément de support 6, cet effet de centrage est complété par le support de fixation 20 dont la surface intérieure cylindrique est dans le prolongement de la surface intérieure de diamètre D₂ de l'élément de support 6.

Les variantes illustrées sur les figures 10, 11 et 12 différent principalement par le mode de fixation du support de fixation 20 sur le support d'encastrement 19.

Dans le cas de la figure 10, le support de fixation 20 est fixé sur le support d'encastrement 19 par l'intermédiaire d'une pièce de liaison 56 réalisée en au moins deux secteurs de façon à pouvoir être assemblée autour d'une partie postérieure de révolution 57 du support de fixation 20 et être en appui radial sur cette dernière. La pièce 56 présente une section en forme d'équerre avec une partie cylindrique 58 encastrée dans une gorge 59 à la surface de la partie postérieure 57 du support 20, et une partie radiale en forme de bride 60 bloquée contre le support d'encastrement 19 par des moyens d'assemblages 61 tels que vis ou boulons.

Le support d'encastrement 19 illustré par la figure 11 comporte une partie cylindrique présentant une portion postérieure 22 en appui sur la partie postérieure 57 du support de fixation 20 qui peut ainsi être fixé au support d'encastrement 19 par des moyens d'assemblage 62 de tout type connu, par exemple des vis ou des boulons.

Dans le cas de la figure 12, le montage du support de fixation 20 est assuré par une pièce de liaison annulaire radiale telle qu'une bride 63, réalisée de préférence en au moins deux secteurs assemblables, et qui est fixé à la fois sur le support de fixation 20 et sur le support d'encastrement par des moyens d'assemblages 64 et 61' de tout type connu, tels que vis ou boulons.

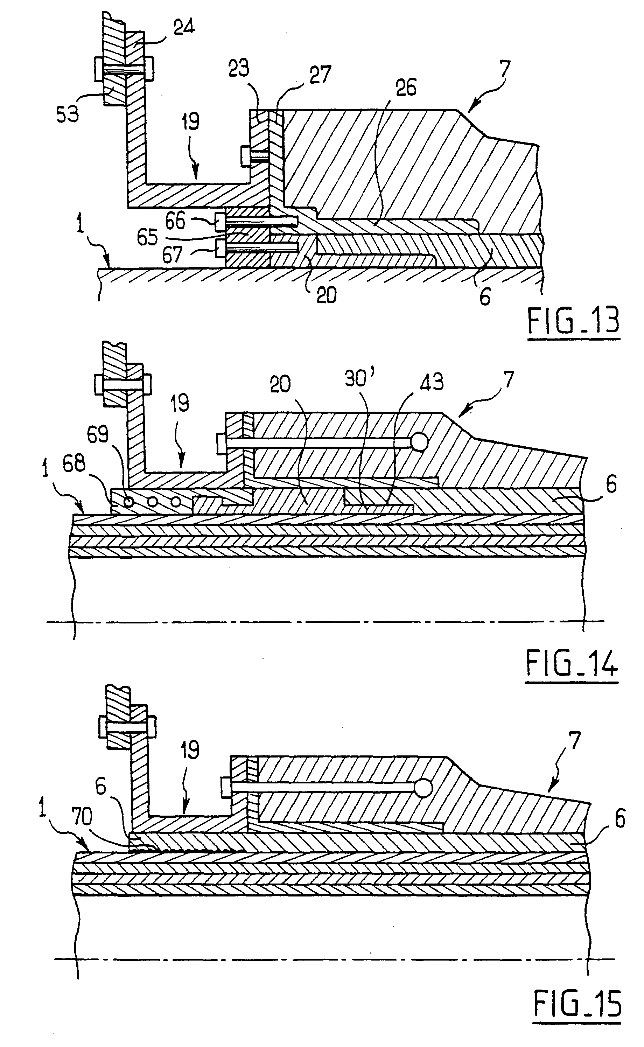

Au lieu d'être réalisé par assemblage avec le support d'encastrement 19 comme dans le cas des figures 10, 11 et 12, le montage du support de fixation illustré par la figure 13 est obtenu en l'assemblant avec le raidisseur 7 par l'intermédiaire de moyens d'assemblage tels qu'une bride 65. La bride 65 est bloquée à la fois, par des moyens de fixation 66 et 67, sur le support de fixation 20 et sur les plaques métalliques 26 et 27 qui constituent les bordures interne et arrière de la partie postérieure d'encastrement 25 du raidisseur 7.

Les figures 14, 15 et 16 illustrent des exemples de réalisation comportant un élément de support 6 immobilisé sur la conduite flexible 1, l'ensemble ainsi constitué pouvant coulisser axialement, si nécessaire, à l'intérieur de l'ensemble constitué par le raidisseur 7 et le support d'encastrement 19.

Dans le cas de la figure 14, l'élément de support 6 est bloqué axialement sur la conduite flexible par l'intermédiaire du support de fixation 20, avec lequel il est solidarisé, par exemple, par adhérisation de son interface 43 avec la partie cylindrique antérieure 30' du support de fixation 20. Le support 20 est immobilisé sur la conduite flexible grâce à un collier de serrage 68 constitué d'au moins deux parties qui sont assemblées à la fois autour de la conduite flexible 1 et du support de fixation 20, puis serrées, par des moyens tels que des boulons 69 de manière à bloquer le collier 68 sur la conduite flexible et à l'ancrer sur le support 20, l'ancrage pouvant être assuré en donnant aux extrémités en regard du collier 68 et du support 20 des formes imbriquées provoquant un accrochage axial comme illustré figure 14.

La figure 15 illustre un mode de réalisation simplifié, l'élément de support 6 étant directement immobilisé sur la conduite flexible par adhérisation de l'interface 70 de la partie postérieure de sa surface intérieure avec la surface extérieure de la conduite.

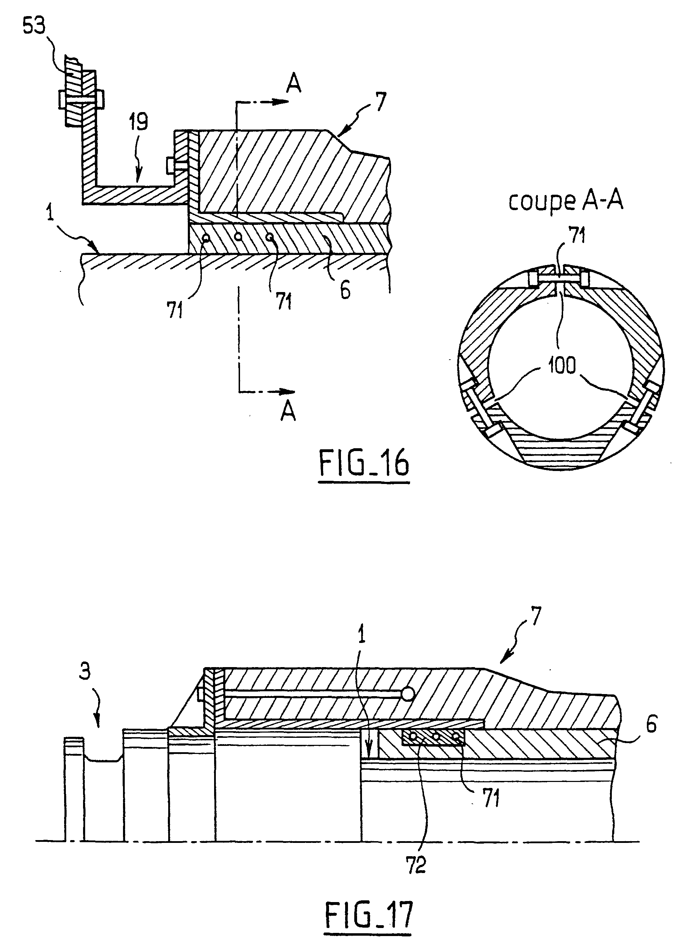

La figure 16 illustre un autre mode de réalisation voisin de celui de la figure 15, le blocage de la partie postérieure de l'élément de support 6 étant réalisé par un effet purement mécanique de serrage autour de la conduite flexible 1. L'élément de support est réalisé, au moins dans sa partie postérieure, sous la forme d'une pluralité de secteurs séparés par des fentes 100 et qui peuvent être serrés les uns contre les autres de manière à être pressés contre la conduite flexible 1 à la manière d'un collier segmenté, le serrage pouvant être réalisé par tous moyens connus, tels que des boulons 71.

La figure 17 illustre un autre mode de réalisation selon lequel l'élément de support 6 est également immobilisé sur la conduite flexible, le raidisseur 7 étant monté sur un embout 3, comme dans le cas de la figure 7. Le blocage de l'élément de support est réalisé par serrage sur la conduite flexible 1 d'un collier 72 qui est disposé dans un évidement annulaire ouvert dans la surface extérieure de l'élément 6.

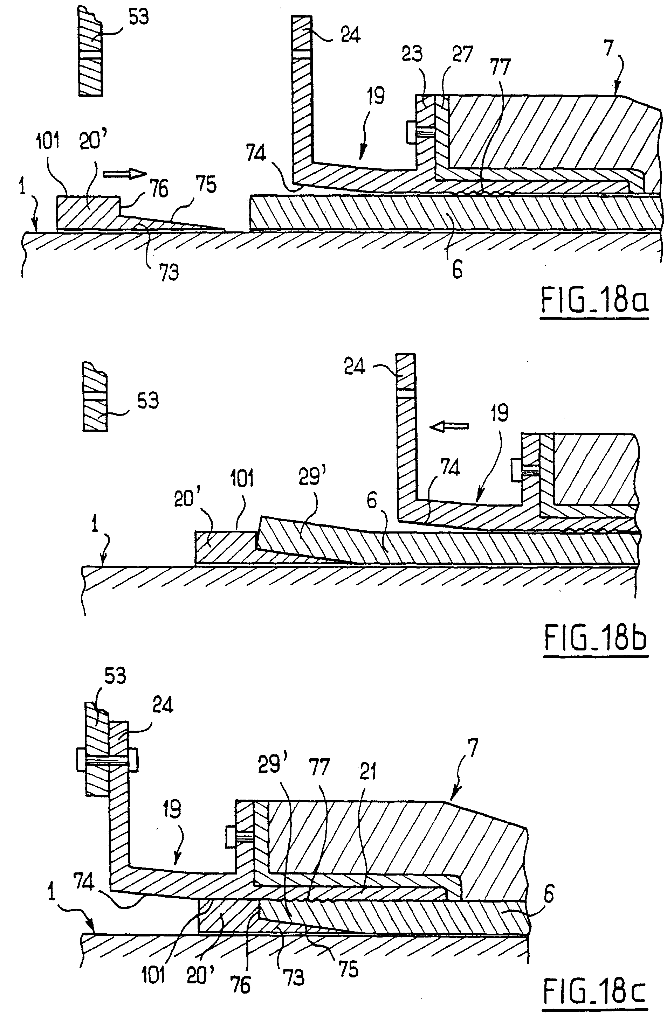

La figure 18 illustre un autre mode de réalisation selon lequel l'élément de support 6 est fixé par l'intérieur au support d'encastrement 19. Le support de fixation 20' comporte une partie antérieure 73 dont la surface extérieure 75 est conique et non pas cylindrique comme c'est le cas pour la partie antérieure 30' des exemples des figures 10, 11, 12, 13 et 14. La surface interne de la partie postérieure du support d'encastrement 19 présente une portée conique 74. Dans une étape préliminaire de l'opération d'installation, illustrée par la figure 18a, l'ensemble constitué par le raidisseur 7 et le support d'encastrement 19 est déplacé vers l'avant pour dégager la partie postérieure de l'élément de support 6. Le support de fixation 20' est alors poussé vers l'avant, de sorte que la portée 75 qui est à l'avant du support 20', agit à la manière d'un dudgeon en soulevant progressivement l'élément 6 dont la partie postérieure prend une configuration conique évasée comme illustré sur la figure 18b, la progression du support 20' vers l'avant, c'est-à-dire vers la droite de la figure 18, étant arrêtée lorsqu'une portée radiale 76 du support de fixation 20' parvient en butée axiale contre l'extrémité arrière de l'élément de support 6. Dans cette situation, la partie postérieure de l'élément de support 6 est en dépassement à l'extérieur par rapport à sa surface cylindrique de diamètre D₄. En ramenant vers l'arrière le support d'encastrement 19 solidaire du raidisseur 7, on réalise l'encastrement de la portée cylindrique 101 du support de fixation 20' à l'intérieur du support d'encastrement 19, la portée conique 74 du support de fixation 20' chassant vers l'intérieur la partie de l'élément de support qui est en dépassement par rapport au diamètre intérieur du support d'encastrement 19, de sorte que la partie d'extrémité arrière 29' de l'élément de support 6 se trouve serrée fortement et retenue entre le support d'encastrement 19 et la partie antérieure 73 du support de fixation 20' (figure 18c). L'ancrage de la partie 29' de l'élément 6 peut être renforcé en pratiquant des striures ou des ondulations sur une partie 77 de la surface interne du support d'encastrement 19. Bien évidement, la partie arrière 29' de l'élément d'appui 6 peut également être plaquée contre la surface interne du raidisseur 7.

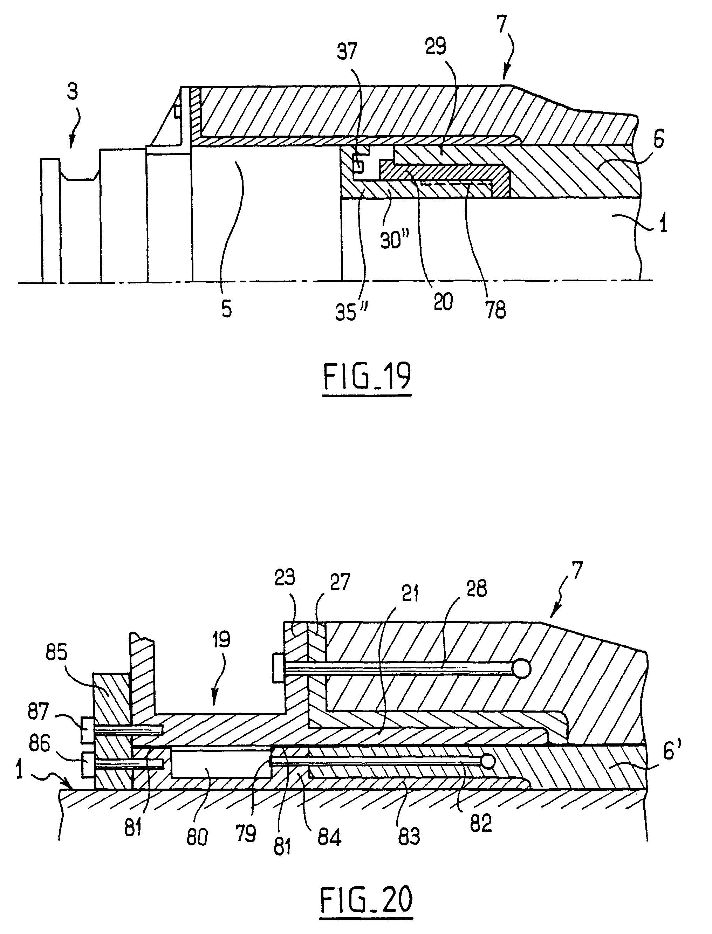

La figure 19 illustre un autre mode de réalisation voisin de celui de la figure 7, la liaison entre le support de fixation 20 et l'embout 3 étant réalisée par un procédé différent qui convient particulièrement bien dans le cas des flexibles de diamètre intérieur relativement faible, de l'ordre de 50 mm à 120 mm. Une pièce de liaison 35" est préalablement fixée à l'embout 3 par des moyens 37. Les surfaces en regard de la partie antérieure 30" de la pièce de liaison 35" et du support 20 présentent, sur une partie de leur longueur, des filetages complémentaires 78, de sorte que le blocage du support 20 sur l'embout 3 par l'intermédiaire de la pièce 35" est réalisé en faisant tourner autour de l'axe de la conduite flexible l'ensemble constitué par le support 20 et l'élément de support 6 jusqu'à ce que la vis 78 soit complètement serrée.

Dans un autre mode de réalisation particulier, l'élément de support présente un niveau suffisamment élevé de résistance aux déformations en flexion pour pouvoir jouer un rôle de raidisseur en complément au raidisseur 7. Dans le cas de l'exemple illustré sur la figure 20, le raidisseur 7 est monté sur un support d'encastrement 19. L'élément 6' remplissant à la fois le rôle de support et d'appui pour le raidisseur principal 7 et de raidisseur pour la conduite flexible 1 est solidement fixé par des moyens 79 à un organe 80 jouant à la fois le rôle de support de fixation de l'élément 6' et de support d'encastrement complémentaire, lui même positionné avec précision à l'intérieur du support d'encastrement par des moyens tels que des portées cylindriques usinées 81. L'efficacité de l'élément de support 6' dans sa fonction de raidisseur additionnel peut être augmentée par une armature interne 82, telle que, par exemple, décrite dans le brevet WO 92/12376. Dans le même but d'augmenter l'effet de raidissement additionnel, le support d'encastrement interne 80 comporte avantageusement une partie antérieure cylindrique 83 sur laquelle la partie postérieure d'encastrement de l'élément 6' est en appui.

L'armature 82 comporte des éléments allongés qui sont soumis à des efforts de traction ou de compression selon qu'ils se trouvent du côté extrados ou du côté intrados en fonction du sens dans lequel la conduite flexible est incurvée. Les extrémités arrière des éléments allongés de l'armature 82 traversent une partie antérieure 84 du support d'encastrement interne 80 et sont bloquées par des moyens de fixation tels que des soudures 79 ou des boulons de manière à assurer la reprise des efforts longitudinaux de traction et de compression par le support interne 80. Ces efforts longitudinaux associés au fonctionnement de l'élément 6' comme raidisseur sont repris par le support de fixation 19 par l'intermédiaire d'une bride annulaire 85 fixée au support interne 80 et au support d'encastrement par des moyens de fixation respectivement 86 et 87 tels que des boulons.

Dans une autre forme de réalisation non représentée, le support d'encastrement est constitué par l'embout 3 ; dans ce cas, la surface externe du support d'encastrement interne 80 constitue une portée de contact cylindrique en appui sur une partie renforcée correspondante du raidisseur, le support d'encastrement interne et de fixation 80 étant par ailleurs fixé par encastrement sur la face avant de l'embout terminal 3.

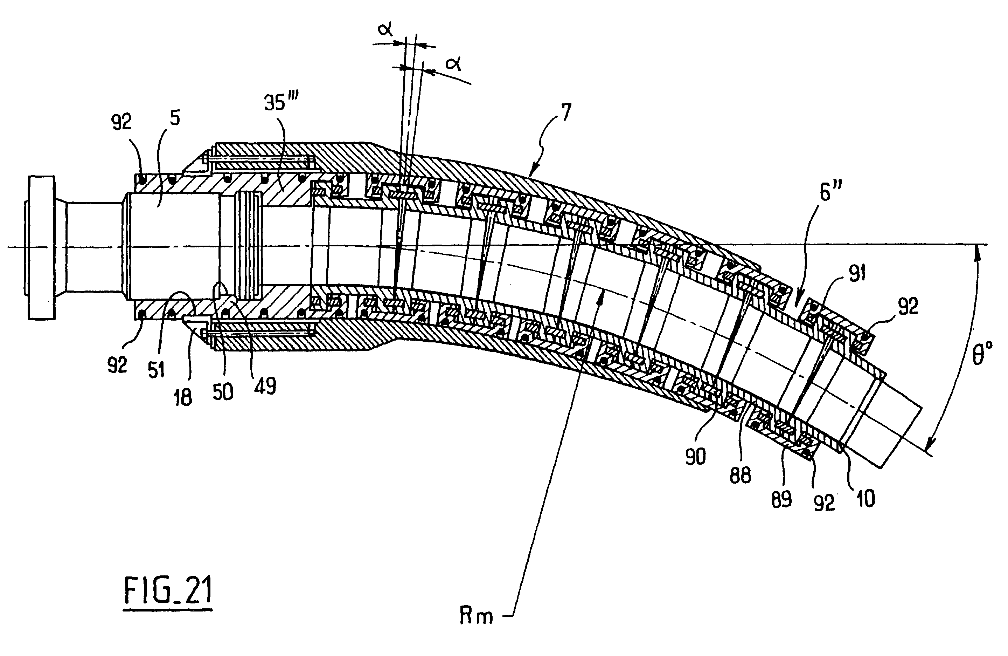

Dans le mode particulier de réalisation illustré sur la figure 21, l'élément de support 6" comporte des éléments de blocage limitant la courbure de la conduite flexible à une valeur maximale déterminée. L'ensemble constitué par la combinaison du raidisseur 7 et de l'élément de support 6" est donc à la fois un raidisseur et un limiteur de courbure ("bend stiffener" et "bend limiter" selon les définitions API RP 17B).

Les éléments de blocage comportent un ensemble d'anneaux imbriqués dont la section est en forme de U, l'ouverture étant alternativement orientée vers l'extérieur pour les anneaux intérieurs 88 et vers l'intérieur pour les anneaux extérieurs 89. Selon le principe en soi connu des limiteurs de courbure du type dit "à vertèbres", la distance longitudinale entre anneaux voisins est limitée entre des valeurs minimale et maximale données. Dans le cas de l'exemple avantageux de la figure 21, le rayon minimum de courbure est obtenu par appui mutuel des bords latéraux des éléments 88 du côté intrados et, du côté extrados, par appui mutuel d'une partie latérale d'un anneau 88 et d'une partie latérale d'un anneau 89. Les parties latérales des anneaux 88 et 89 comportent avantageusement un logement annulaire de manière à pouvoir loger des éléments annulaires en matériau élastomèrique 90 et 91 disposés respectivement entre les bords latéraux en regard des éléments 88 et dans chaque espace entre une partie latérale d'un anneau 88 et une partie latérale d'un anneau 89. Le blocage de la conduite flexible 1 à son rayon de courbure minimum est ainsi assuré progressivement et sans choc, par compression des anneaux 90 du côté intrados et des anneaux 91 du côté extrados, jusqu'à contact des portées en regard des anneaux respectivement 88 et 89. La combinaison de l'élément de support à anneaux 6" avec le raidisseur 7 permet de réaliser un dispositif particulièrement intéressant pour contrôler la courbure, car il combine l'avantage des limiteurs de courbure qui est de limiter la courbure à une valeur fixée tout en étant d'un encombrement relativement limité, y compris pour des courbures maximales de niveau élevé, avec l'aptitude des raidisseurs à travailler en dynamique, alors que les limiteurs à vertèbres de type connu sont limités aux applications statiques. La figure 21 illustre le dispositif dans sa configuration limite, la conduite flexible 1 présentant, dans la zone couverte par l'élément de support et de limitation de courbure 6" un rayon de courbure égal à sa valeur minimale Rₘ. Dans le cas de l'exemple illustré, les anneaux internes 88 étant semblables entre eux, de même que les anneaux externes 89, la valeur limite de l'angle que peuvent faire entre eux les axes de deux anneaux contigus de même type, deux anneaux internes 88 par exemple, a une valeur donnée illustrée par l'angle 2α sur la figure 21. Alternativement, cet angle pourrait varier dans la longueur du dispositif si les divers anneaux avaient des dimensions différentes de l'arrière à l'avant du dispositif. Les écarts angulaires entre les anneaux successifs s'additionnent, de sorte que l'axe de la conduite flexible à l'endroit de la partie antérieure de l'élément 6" est dévié d'un angle θ par rapport à l'axe de l'embout terminal 3.

Les anneaux 88 et 89 sont réalisés en matériau dur et mécaniquement résistant, en particulier métallique, le choix du métal dépendant en particulier des conditions spécifiques de corrosion, ou encore en plastique, en particulier en plastique renforcé par des fibres. Les anneaux extérieurs 89 sont, de préférence, réalisés en plusieurs éléments assemblables, par exemple en deux demi-anneaux. Dans le cas de l'exemple de la figure 21, le raidisseur 7 est monté sur un embout terminal 3, la disposition générale étant analogue à celle de l'exemple de la figure 8. L'élément 6" combinant la fonction de support du raidisseur 7 et celle de limitation de la courbure est fixé sur l'embout 3 par un organe de liaison 35''' dont la partie antérieure présente un profil agrafable, avec une partie latérale en relief délimitant une partie en cuvette, dont le contour est semblable à celui d'une moitié d'un anneau de blocage, par exemple d'un anneau 89 dans le cas illustré ici. De même que les anneaux externes 89, l'élément de liaison 35''' est constitué par plusieurs secteurs assemblables, par exemple deux moitiés assemblables par des boulons 92. La surface intérieure de l'élément 35''' comporte une partie en relief 49 engagée dans un logement annulaire 50 à la surface du corps principal 5 de l'embout. L'élément 6" étant constitué par un ensemble d'anneaux rigides, il ne comporte pas de support d'encastrement tel que le support 19 utilisé dans le cas de diverses variantes d'élément de support 6 principalement constitué de matériau plastique, et il est directement accroché à la pièce de liaison 35''' par agrafage entre l'anneau le plus en arrière de l'élément 6", par exemple un anneau interne 88, et la partie antérieure de l'élément 35", qui présente alors le même profil d'agrafage que les anneaux externes 89. Le raidisseur 7 est passé autour de l'élément 6" et de l'organe de liaison 35''' et fixé à l'embout 3 par une bride 18 dont le bord interne est logé dans un évidement annulaire 51 à la surface de l'organe de liaison 35'''.

Dans une variante non illustrée, un élément de support et d'appui du raidisseur 7 et de blocage de la courbure analogue à l'élément 6" de la figure 21 peut être utilisé dans le cas ou le raidisseur est monté sur un support d'encastrement 19 à distance des embouts terminaux. La fixation d'un tel élément 6" sur le support d'encastrement 19 peut se faire par l'intermédiaire d'un organe de liaison 35''' qui est accroché à l'élément 6" par agrafage de la même façon qu'illustré en figure 21. L'organe de liaison 35''' étant disposé, dans le sens radial, entre la conduite flexible 1 et le support d'encastrement 19, il peut être fixé au support d'encastrement par des moyens analogues à ceux décrits ci-dessus pour assembler la partie postérieure 57 du support de fixation 20 avec le support d'encastrement. On peut aussi, par exemple, utiliser un collier à section en forme d'équerre semblable à la pièce de liaison 56 illustrée en figure 10, ou encore fixer l'organe de liaison 35''' sur une portion postérieure cylindrique 22 du support d'encastrement 19 avec des boulons 62, comme illustré en figure 11.

Un autre avantage de la présente invention réside dans le fait qu'on peut monter le raidisseur sur la conduite flexible après avoir effectué les essais de pression et ce, au départ de l'usine, au moment où la conduite flexible commence à être mise en place dans les moyens de stockage tels que des paniers sur le navire de pose.

La présente invention est également avantageuse dans le cas de conduite flexible comportant des embouts de très grandes dimensions. En particulier, on peut mettre en oeuvre le mode de réalisation représenté sur la. figure 20, ce qui permet de réaliser des dispositifs limiteurs de courbure de performances extrêmement élevées qui ne peuvent être obtenues avec les raidisseurs fabriqués avec les moyens industriels existants. Il est ainsi évident qu'on ne sort pas du cadre de la présente invention dans le cas où le raidisseur serait installé avant le montage de l'embout.

## Revendications

1. Dispositif limiteur de courbure pour conduite flexible (1) munie d'embouts terminaux (3) disposés aux deux extrémités de ladite conduite flexible, et comprenant au moins un raidisseur (7) qui est disposé autour d'une longueur de ladite conduite flexible et qui est fixé par une partie arrière sur un support d'encastrement, un élément d'appui (6, 6', 6") pour le raidisseur (7) qui est disposé entre la conduite flexible (1) et le raidisseur (7) et qui comporte au moins une partie déformable en flexion qui s'étend sur une longueur de la conduite flexible située au moins entre la partie arrière et l'extrémité avant du raidisseur, **caractérisé en ce que** ledit raidisseur présente un diamètre interne supérieur au diamètre extérieur maximum (D_{M}) d'un desdits embouts terminaux (3), de manière que ledit raidisseur (7) puisse coulisser autour dudit embout terminal (3).

2. Dispositif selon la revendication 1, **caractérisé en ce que** l'élément d'appui (6) est disposé autour de la conduite flexible avant le montage d'au moins un desdits embouts terminaux (3).

3. Dispositif selon la revendication 1 ou 2, **caractérisé en ce que** les diamètres interne et externe de ladite partie déformable de l'élément d'appui sont, en fonctionnement, respectivement égaux sensiblement au diamètre externe de la conduite flexible et au diamètre interne du raidisseur.

4. Dispositif selon l'une des revendications 1 à 3, **caractérisé en ce que** le support d'encastrement est constitué par un embout terminal.

5. Dispositif selon la revendication 4, **caractérisé en ce que** l'embout terminal (3) comporte un corps principal (5) présentant un diamètre externe égal au diamètre maximum, et **en ce que** l'élément d'appui (6, 6', 6") est disposé en avant de l'extrémité antérieure dudit corps principal (5).

6. Dispositif selon la revendication 4, **caractérisé en ce que** l'embout terminal (3) comporte un organe de raccordement (4) présentant un diamètre externe égal au diamètre maximum et **en ce que** l'élément d'appui (6, 6', 6") comporte une partie arrière (29) disposée autour du corps principal (5).

7. Dispositif selon la revendication 4, **caractérisé en ce que** l'embout terminal (3) comporte un organe de raccordement (4) présentant un diamètre externe égal au diamètre maximum et **en ce que** l'élément d'appui (6, 6', 6") est solidaire d'un organe annulaire (35', 35") disposé entre le corps principal (5) de l'embout et le raidisseur (7).

8. Dispositif selon l'une des revendications 1 à 3, **caractérisé en ce que** le support d'encastrement est constitué par une pièce d'encastrement (19) distincte dudit embout terminal (3) et disposée autour dudit flexible.

9. Dispositif selon la revendication 8, **caractérisé en ce que** l'élément d'appui (6, 6', 6") est fixé au support d'encastrement (19) et présente un jeu radial par rapport à la surface extérieure de la conduite flexible, de manière à permettre un mouvement longitudinal relatif entre l'élément d'appui (6, 6', 6") et la conduite flexible.

10. Dispositif selon l'une des revendications précédentes, **caractérisé en ce que** l'élément d'appui (6, 6', 6") présente un taux d'écrasement inférieur à 10 % sous une pression de 10 bars.

11. Dispositif selon l'une des revendications précédentes, **caractérisé en ce que** l'élément d'appui (6, 6', 6") est en matière plastique flexible.

12. Dispositif selon la revendication 11, **caractérisé en ce que** l'élément d'appui (6, 6', 6") présente une dureté Shore A supérieure à 30.

13. Dispositif selon l'une des revendications précédentes, **caractérisé en ce que** l'élément d'appui (6, 6', 6") est constitué en plusieurs secteurs (17) disposés autour de la conduite flexible.

14. Dispositif selon l'une des revendications 1 à 12, **caractérisé en ce que** l'élément d'appui (6, 6', 6") est constitué par un manchon muni de fentes (100) du côté de la partie arrière du raidisseur.

15. Dispositif selon l'une des revendications précédentes, **caractérisé en ce qu'**il comprend, en outre, des moyens d'échange thermique.

16. Dispositif selon la revendication 15, **caractérisé en ce que** les moyens d'échange thermique sont constitués par des canaux (12, 12') dans lesquels circule de l'eau de mer.

17. Dispositif selon la revendication 16, **caractérisé en ce que** les canaux sont constitués par des rainures (12) ménagées sur la surface interne de l'élément d'appui.

18. Dispositif selon la revendication 16, **caractérisé en ce que** les canaux sont constitués par des rainures (12') ménagées sur la surface externe de l'élément d'appui.

19. Dispositif selon l'une des revendications précédentes, **caractérisé en ce qu'**il comporte un support de fixation (20, 20', 80) en appui sur la conduite flexible et sur le support d'encastrement (3, 19), ledit support de fixation étant fixé axialement, d'une part, à l'élément d'appui (6, 6', 6"), et d'autre part, au support d'encastrement (3, 19) de manière à immobiliser l'élément d'appui par rapport au support d'encastrement.

20. Dispositif selon la revendication 19, **caractérisé en ce que** l'élément d'appui (6, 6') comporte une partie arrière cylindrique (29) en appui sur une partie cylindrique (30, 30', 83) du support de fixation (20, 80).

21. Dispositif selon la revendication 22, **caractérisé en ce que** la partie arrière cylindrique (29) de l'élément d'appui (6, 6') est disposée à l'extérieur de la partie cylindrique (30, 30', 83) du support de fixation (20, 80).

22. Dispositif selon l'une des revendications 20 ou 21, **caractérisé en ce que** la fixation de l'élément d'appui (6) sur le support de fixation (20) dans le sens axial de la conduite flexible est assurée par adhérisation de l'interface (43) entre les surfaces en regard de la partie arrière (29) de l'élément d'appui (6) et de la partie cylindrique (30, 30') du support de fixation (20).

23. Dispositif selon les revendications 8 et 19, **caractérisé en ce que** le support de fixation (20') comporte une partie antérieure (73) présentant une surface externe conique (74) permettant de plaquer une partie arrière (29') de l'élément d'appui (6) contre la surface interne du support d'encastrement (19).

24. Dispositif selon la revendication 19, **caractérisé en ce que** le support de fixation (20, 20', 80) présente une portée cylindrique (101, 81) en appui sur le support d'encastrement (3, 19) de manière à permettre l'encastrement direct du support de fixation (20, 20', 80) sur le support d'encastrement (3, 19).

25. Dispositif selon la revendication 19, **caractérisé en ce qu'**il comporte une pièce de liaison (35, 35', 35", 56, 63) appliquée par des portées d'appui, d'une part, contre le support de fixation, et d'autre part, contre le support d'encastrement, apte à permettre au moins en partie l'encastrement du support de fixation (20) sur le support d'encastrement (3, 19).

26. Dispositif selon la revendication 25, **caractérisé en ce que** la pièce de liaison est réalisée en au moins deux secteurs assemblables.

27. Dispositif selon la revendication 1, **caractérisé en ce que** la partie arrière de l'élément d'appui (6) est fixée sur la conduite flexible (1) par des moyens de serrage (71, 72) assurant sa retenue dans le sens axial de la conduite flexible.

28. Dispositif selon la revendication 1, **caractérisé en ce que** la retenue de l'élément d'appui (6) dans le sens axial de la conduite flexible est assurée par adhérisation d'une zone de l'interface de la partie arrière de l'élément d'appui avec la conduite flexible.

29. Dispositif selon la revendication 19, **caractérisé en ce qu'**il comporte un collier (68) serré autour de la conduite flexible (1) et fixé sur le support de fixation (20) de manière à assurer la retenue axiale de l'élément d'appui (6).

30. Dispositif selon les revendications 8 et 20, **caractérisé en ce que** la partie arrière (29) de l'élément d'appui (6) est disposée entre une partie cylindrique (55) du support d'encastrement (19) et la partie antérieure (30') du support de fixation (20).

31. Dispositif selon la revendication 8, **caractérisé en ce que** le support d'encastrement comporte une partie cylindrique arrière (22) sur laquelle est en appui la partie postérieure (57) du support de fixation (20).

32. Dispositif selon les revendications 4 et 19, **caractérisé en ce que** les surfaces en regard de la partie antérieure (30") de la pièce de liaison (35") et du support de fixation (20) présentent des filetages complémentaires (78).

33. Dispositif selon la revendication 1, **caractérisé en ce que** l'élément d'appui (6') présente une résistance à la déformation en flexion suffisante pour pouvoir constituer un élément de raidissement complémentaire dont l'effet s'additionne à celui du raidisseur (7) pour réduire la courbure de la conduite flexible (1).

34. Dispositif selon la revendication 33, caractérisé en que l'élément d'appui et de raidissement complémentaire est en une matière plastique flexible présentant un module de traction au moins égale à 50 MPa, de préférence comportant des fibres de renforcement noyées dans ladite matière plastique.

35. Dispositif selon les revendications 33 ou 34, caractérisé en que l'élément d'appui et de raidissement complémentaire (6') comporte une armature interne (82) métallique comprenant des éléments allongés s'étendant de façon continue sur une certaine longueur, et en ce que l'extrémité arrière desdits éléments allongés d'armature est en dépassement par rapport à l'extrémité arrière de l'élément d'appui et de raidissement complémentaire (6'), de manière à être ancrée par des moyens de fixation (79) au support de fixation (80) jouant le rôle de support d'encastrement interne qui est fixé par encastrement sur le support d'encastrement (19).

36. Dispositif selon les revendications 8 et 35, **caractérisé en ce que** la surface externe du support de fixation et d'encastrement interne (80) constitue une portée de contact cylindrique en appui sur une portée correspondante du support d'encastrement (19).

37. Dispositif selon les revendications 4 et 35, **caractérisé en ce que** la surface externe du support d'encastrement interne (80) constitue une portée de contact cylindrique (81) en appui sur une partie correspondante de la surface interne du raidisseur (7), le support d'encastrement interne (80) étant fixé par encastrement sur l'embout terminal(3).

38. Dispositif selon la revendication 1, **caractérisé en ce que** l'élément d'appui (6, 6") comporte des anneaux en matériau rigide.

39. Dispositif selon la revendication 38, **caractérisé en ce que** l'élément d'appui (6, 6") comporte des anneaux métalliques (88, 89) constituant un moyen de blocage limitant la courbure de la conduite flexible (1) à une valeur maximale déterminée, les deux bords circulaires de chaque anneau (88, 89) comportant des projections radiales imbriquées avec les projections radiales des anneaux contigus, de sorte que l'ensemble comprenant le raidisseur (7) et l'élément d'appui et de blocage (6, 6") de la courbure constitue un dispositif de contrôle de la courbure du flexible combinant les fonctions du raidisseur et de limiteur de courbure.

40. Dispositif selon la revendication 39, **caractérisé en ce que** l'élément d'appui et de blocage (6") de la courbure comporte des anneaux de blocage (88, 89) imbriqués et dont la section est en forme de U alternativement ouvert vers l'intérieur et vers l'extérieur.

41. Dispositif selon la revendication 40, **caractérisé en ce que** les anneaux de blocage (88, 89) sont séparés par des éléments élastomèriques annulaires (90, 91) mis en compression lorsque les anneaux sont déplacés les uns par rapport aux autres, de manière à venir en butée dans une position correspondant au blocage à ladite valeur maximale de la courbure.

## Patentansprüche

1. Krümmungsbegrenzungsvorrichtung für flexible Rohrleitung (1), die mit Endansatzstücken (3) versehen ist, die an den beiden Enden der flexiblen Rohrleitung angeordnet sind, und wenigstens eine Aussteifung (7), die über eine Länge der flexiblen Rohrleitung angeordnet ist und mit einem hinteren Teil an einem Einbauträger befestigt ist, und ein Abstützelement (6, 6', 6") für die Aussteifung (7), das zwischen der flexiblen Rohrleitung (1) und der Aussteifung (7) angeordnet ist und wenigstens einen biegeverformbaren Abschnitt enthält, der sich über eine Länge der flexiblen Rohrleitung erstreckt, die sich zwischen dem hinteren Teil und dem vorderen Ende der Aussteifung befindet, umfaßt, **dadurch gekennzeichnet, daß** die Aussteifung einen Innendurchmesser besitzt, der größer als der maximale Außendurchmesser (D_{M}) eines der Endansatzstücke (3) ist, derart, daß die Aussteifung (7) um das Endansatzstück (3) gleiten kann.

2. Vorrichtung nach Anspruch 1, **dadurch gekennzeichnet, daß** das Abstützelement (6) um die flexible Rohrleitung angeordnet wird, bevor wenigstens eines der Endansatzstücke (3) montiert wird.

3. Vorrichtung nach Anspruch 1 oder 2, **dadurch gekennzeichnet, daß** der Innendurchmesser und der Außendurchmesser des verformbaren Abschnitts des Abstützelements im Betrieb im wesentlichen gleich dem Außendurchmesser der flexiblen Rohrleitung bzw. dem Innendurchmesser der Aussteifung sind.

4. Vorrichtung nach einem der Ansprüche 1 bis 3, **dadurch gekennzeichnet, daß** der Einbauträger durch ein Endansatzstück gebildet ist.

5. Vorrichtung nach Anspruch 4, **dadurch gekennzeichnet, daß** das Endansatzstück (3) einen Hauptkörper (5) umfaßt, der einen Außendurchmesser aufweist, der gleich dem maximalen Durchmesser ist, und daß das Abstützelement (6, 6', 6") vor dem vorderen Ende des Hauptkörpers (5) angeordnet ist.

6. Vorrichtung nach Anspruch 4, **dadurch gekennzeichnet, daß** das Endansatzstück (3) ein Verbindungsorgan (4) umfaßt, das einen Außendurchmesser besitzt, der gleich dem maximalen Durchmesser ist, und daß das Abstützelement (6, 6', 6") einen hinteren Teil (29) umfaßt, der um den Hauptkörper (5) angeordnet ist.

7. Vorrichtung nach Anspruch 4, **dadurch gekennzeichnet, daß** das Endansatzstück (3) ein Verbindungsorgan (4) umfaßt, das einen Außendurchmesser aufweist, der gleich dem maximalen Durchmesser ist, und daß das Abstützelement (6, 6', 6") mit einem ringförmigen Organ (35', 35") fest verbunden ist, das zwischen dem Hauptkörper (5) des Ansatzstücks und der Aussteifung (7) angeordnet ist.

8. Vorrichtung nach einem der Ansprüche 1 bis 3, **dadurch gekennzeichnet, daß** der Einbauträger durch ein Einbauteil (19) gebildet ist, das von dem Endansatzstück (3) verschieden und um die flexible Rohrleitung angeordnet ist.

9. Vorrichtung nach Anspruch 8, **dadurch gekennzeichnet, daß** das Abstützelement (6, 6', 6") am Einbauträger (19) befestigt ist und ein radiales Spiel in bezug auf die äußere Oberfläche der flexiblen Rohrleitung aufweist, so daß zwischen dem Abstützelement (6, 6', 6") und der flexiblen Rohrleitung eine relative longitudinale Bewegung möglich ist.

10. Vorrichtung nach einem der vorherigen Ansprüche, **dadurch gekennzeichnet, daß** das Abstützelement (6, 6', 6") bei einem Druck von 10 Bar einen Stauchungsgrad von weniger als 10 % aufweist.

11. Vorrichtung nach einem der vorhergehenden Ansprüche, **dadurch gekennzeichnet, daß** das Abstützelement (6, 6', 6") aus einem flexiblen Kunststoff besteht.

12. Vorrichtung nach Anspruch 11, **dadurch gekennzeichnet, daß** das Abstützelement (6, 6', 6") eine Shore-A-Härte von mehr als 30 aufweist.

13. Vorrichtung nach einem der vorherigen Ansprüche, **dadurch gekennzeichnet, daß** das Abstützelement (6, 6', 6") aus mehreren Sektoren (17) gebildet ist, die um die flexible Rohrleitung angeordnet sind.

14. Vorrichtung nach einem der Ansprüche 1 bis 12, **dadurch gekennzeichnet, daß** das Abstützelement (6, 6', 6") durch eine Muffe gebildet ist, die auf seiten des hinteren Teils der Aussteifung mit Schlitzen (100) versehen ist.

15. Vorrichtung nach einem der vorhergehenden Ansprüche, **dadurch gekennzeichnet, daß** sie außerdem Wärmeaustauschmittel umfaßt.

16. Vorrichtung nach Anspruch 15, **dadurch gekennzeichnet, daß** die Wärmeaustauschmittel durch Kanäle (12, 12') gebildet sind, in denen Meerwasser zirkuliert.

17. Vorrichtung nach Anspruch 16, **dadurch gekennzeichnet, daß** die Kanäle durch Rinnen (12) gebildet sind, die in der inneren Oberfläche des Abstützelements ausgebildet sind.

18. Vorrichtung nach Anspruch 16, **dadurch gekennzeichnet, daß** die Kanäle durch Rinnen (12') gebildet sind, die in der äußeren Oberfläche des Abstützelements ausgebildet sind.

19. Vorrichtung nach einem der vorhergehenden Ansprüche, **dadurch gekennzeichnet, daß** sie einen Befestigungsträger (20, 20', 80) umfaßt, der sich auf der flexiblen Rohrleitung und auf dem Einbauträger (3, 19) abstützt, wobei der Befestigungsträger einerseits am Abstützelement (6, 6', 6") und andererseits am Einbauträger (3, 19) axial befestigt ist, so daß das Abstützelement in bezug auf den Einbauträger unbeweglich ist.

20. Vorrichtung nach Anspruch 19, **dadurch gekennzeichnet, daß** das Abstützelement (6, 6') einen zylindrischen hinteren Teil (29) umfaßt, der sich an einem zylindrischen Teil (30, 30', 83) des Befestigungsträgers (20, 80) abstützt.

21. Vorrichtung nach Anspruch 22, **dadurch gekennzeichnet, daß** der zylindrische hintere Teil (29) des Abstützelements (6, 6') außerhalb des zylindrischen Teils (30, 30', 83) des Befestigungsträgers (20, 80) angeordnet ist.

22. Vorrichtung nach einem der Ansprüche 20 oder 21, **dadurch gekennzeichnet, daß** die Befestigung des Abstützelements (6) am Befestigungsträger (20) in axialer Richtung der flexiblen Rohrleitung durch Haftung der Grenzfläche (43) zwischen den Oberflächen gegenüber dem hinteren Teil (29) des Abstützelements (6) und dem zylindrischen Teil (30, 30') des Befestigungsträgers (20) gewährleistet ist.

23. Vorrichtung nach den Ansprüchen 8 und 19, **dadurch gekennzeichnet, daß** der Befestigungsträger (20') einen vorderen Teil (73) umfaßt, der eine konische äußere Oberfläche (74) aufweist, die ermöglicht, einen hinteren Teil (29') des Abstützelements (6) gegen die innere Oberfläche des Einbauträgers (19) zu drücken.

24. Vorrichtung nach Anspruch 19, **dadurch gekennzeichnet, daß** der Befestigungsträger (20, 20', 80) eine zylindrische Auflagefläche (101, 81) aufweist, die sich auf dem Einbauträger (3, 19) abstützt, um eine direkte Anbringung des Befestigungsträgers (20, 20', 80) am Einbauträger (3, 19) zu ermöglichen.

25. Vorrichtung nach Anspruch 19, **dadurch gekennzeichnet, daß** sie ein Verbindungsteil (35, 35', 35", 56, 63) umfaßt, das über Abstützflächen einerseits gegen den Befestigungsträger und andererseits gegen den Einbauträger gedrängt wird und eine wenigstens teilweise Anbringung des Befestigungsträgers (20) am Einbauträger (3, 19) ermöglicht.

26. Vorrichtung nach Anspruch 25, **dadurch gekennzeichnet, daß** das Verbindungsteil aus wenigstens zwei zusammenfügbaren Sektoren verwirklicht ist.

27. Vorrichtung nach Anspruch 1, **dadurch gekennzeichnet, daß** der hintere Teil des Abstützelements (6) an der flexiblen Rohrleitung (1) durch Klemmittel (71, 72) befestigt ist, die sicherstellen, daß er in axialer Richtung der flexiblen Rohrleitung festgehalten wird.

28. Vorrichtung nach Anspruch 1, **dadurch gekennzeichnet, daß** das Festhalten des Abstützelements (6) in axialer Richtung der flexiblen Rohrleitung durch eine Haftung einer Zone der Grenzfläche des hinteren Teils des Abstützelements und der flexiblen Rohrleitung gewährleistet ist.

29. Vorrichtung nach Anspruch 19, **dadurch gekennzeichnet, daß** sie einen Reif (68) umfaßt, der um die flexible Rohrleitung (1) geklemmt ist und am Befestigungsträger (20) so befestigt ist, daß das axiale Festhalten des Abstützelements (6) sichergestellt ist.

30. Vorrichtung nach den Ansprüchen 8 und 20, **dadurch gekennzeichnet, daß** der hintere Teil (29) des Abstützelements (6) zwischen einem zylindrischen Teil (55) des Einbauträgers (19) und dem vorderen Teil (30') des Befestigungsträgers (20) angeordnet ist.

31. Vorrichtung nach Anspruch 8, **dadurch gekennzeichnet, daß** der Einbauträger einen hinteren zylindrischen Teil (22) umfaßt, an dem sich der hintere Teil (57) des Befestigungsträgers (20) abstützt.

32. Vorrichtung nach den Ansprüchen 4 und 19, **dadurch gekennzeichnet, daß** die Oberflächen gegenüber dem vorderen Teil (30") des Verbindungsteils (35") und dem Befestigungsträger (20) komplementäre Gewinde (78) aufweisen.

33. Vorrichtung nach Anspruch 1, **dadurch gekennzeichnet, daß** das Abstützelement (6') gegenüber der Biegeverformung einen Widerstand aufweist, der ausreicht, um ein komplementäres Versteifungselement zu bilden, dessen Wirkung zu jener der Aussteifung (7) hinzukommt, um die Krümmung der flexiblen Rohrleitung (1) zu verringern.

34. Vorrichtung nach Anspruch 33, **dadurch gekennzeichnet, daß** das komplementäre Abstütz- und Versteifungselement aus einem flexiblen Kunststoff besteht, der einen Zugmodul von wenigstens 50 MPa aufweist und vorzugsweise Verstärkungsfasern enthält, die in den Kunststoff eingebettet sind.

35. Vorrichtung nach den Ansprüchen 33 oder 34, **dadurch gekennzeichnet, daß** das komplementäre Abstütz- und Versteifungselement (6') eine metallische innere Bewehrung (82) umfaßt, die langgestreckte Elemente enthält, die sich ohne Unterbrechung über eine bestimmte Länge erstrecken, und daß das hintere Ende der langgestreckten Bewehrungselemente über das hintere Ende des komplementären Abstütz- und Versteifungselements (6') hinausragen, derart, daß sie durch Befestigungsmittel (79) am Befestigungsträger (80) verankert sind und die Aufgabe eines inneren Einbauträgers ausüben, der durch Anbringung am Einbauträger (19) befestigt ist.

36. Vorrichtung nach den Ansprüchen 8 und 35, **dadurch gekennzeichnet, daß** die äußere Oberfläche des inneren Befestigungs- und Einbauträgers (80) eine zylindrische Kontaktauflagefläche bildet, die sich an der entsprechenden Auflagefläche des Einbauträgers (19) abstützt.

37. Vorrichtung nach den Ansprüchen 4 und 35, **dadurch gekennzeichnet, daß** die äußere Oberfläche des inneren Einbauträgers (80) eine zylindrische Kontaktauflagefläche (81) bildet, die sich an einem entsprechenden Teil der inneren Oberfläche der Aussteifung (7) abstützt, wobei der innere Einbauträger (80) durch Anbringung am Endansatzstück (3) befestigt ist.

38. Vorrichtung nach Anspruch 1, **dadurch gekennzeichnet, daß** das Abstützelement (6, 6") Ringe aus einem starren Werkstoff umfaßt.

39. Vorrichtung nach Anspruch 38, **dadurch gekennzeichnet, daß** das Abstützelement (6, 6") Metallringe (88, 89) umfaßt, die ein Blockiermittel bilden, das die Krümmung der flexiblen Rohrleitung (1) auf einem bestimmten Maximalwert begrenzt, wobei die kreisförmigen Ränder jedes Rings (88, 89) radiale Vorsprünge umfassen, die mit den radialen Vorsprüngen benachbarter Ringe verschachtelt sind, derart, daß die Gesamtheit, die die Aussteifung (7) und das Abstütz- und Blockierelement (6, 6") für die Krümmung umfaßt, eine Vorrichtung für die Steuerung der Krümmung der flexiblen Rohrleitung bildet, die die Funktionen der Aussteifung und der Krümmungsbegrenzung kombiniert.

40. Vorrichtung nach Anspruch 39, **dadurch gekennzeichnet, daß** das Abstützund Blockierelement (6") für die Krümmung Blockierringe (88, 89) umfaßt, die miteinander verschachtelt sind und deren Querschnitt U-förmig ist, der abwechselnd nach innen und nach außen geöffnet ist.

41. Vorrichtung nach Anspruch 40, **dadurch gekennzeichnet, daß** die Blockierringe (88, 89) durch ringförmige elastomere Elemente (90, 91) getrennt sind, die mit Druck beaufschlagt werden, wenn die Ringe relativ zueinander verlagert werden, so daß sie bei dem Maximalwert der Krümmung in einer der Blockierung entsprechenden Position in Anschlag gelangen.

## Claims

1. Bend limiter for a flexible pipe (1) fitted with end fittings (3) arranged at the two ends of the said flexible pipe, and comprising at least one stiffener (7) which is arranged around a length of the said flexible pipe and which is fixed by a rear part to a build-in support, a bearing element (6, 6', 6") for the stiffener (7), which is arranged between the flexible pipe (1) and the stiffener (7) and which comprises at least one part which is deformable in bending and extends over a length of the flexible pipe lying at least between the rear part and the front end of the stiffener, **characterized in that** the said stiffener has an inside diameter which is larger than the maximum outside diameter (D_{M}) of one of the said end fittings (3), so that the said stiffener (7) can slide about the said end fitting (3).

2. Device according to Claim 1, **characterized in that** the bearing element (6) is arranged around the flexible pipe before at least one of the said end fittings (3) is fitted.

3. Device according to Claim 1 or 2, **characterized in that** the inside diameter and outside diameter of the said deformable part of the bearing element are, in operation, respectively more or less equal to the outside diameter of the flexible pipe and to the inside diameter of the stiffener.

4. Device according to one of Claims 1 to 3, **characterized in that** the build-in support consists of an end fitting.

5. Device according to Claim 4, **characterized in that** the end fitting (3) comprises a main body (5) which has an outside diameter equal to the maximum diameter, and **in that** the bearing element (6, 6', 6") is arranged forwards of the front end of the said main body (5).

6. Device according to Claim 4, **characterized in that** the end fitting (3) comprises a connecting member (4) which has an outside diameter equal to the maximum diameter and **in that** the bearing element (6, 6', 6") comprises a rear part (29) arranged around the main body (5).

7. Device according to Claim 4, **characterized in that** the end fitting (3) comprises a connecting member (4) which has an outside diameter equal to the maximum diameter and **in that** the bearing element (6, 6', 6") is secured to an annular member (35', 35") arranged between the main body (5) of the fitting and the stiffener (7).

8. Device according to one of Claims 1 to 3, **characterized in that** the build-in support consists of á build-in piece (19) separate from the said end fitting (3) and arranged around the said flexible pipe.

9. Device according to Claim 8, **characterized in that** the bearing element (6, 6', 6") is fixed to the build-in support (9) and has radial clearance with respect to the exterior surface of the flexible pipe, so as to allow a relative longitudinal movement between the bearing element (6, 6', 6") and the flexible pipe.

10. Device according to one of the preceding claims, **characterized in that** the bearing element (6, 6', 6") is crushed by less than 10% at a pressure of 10 bar.

11. Device according to one of the preceding claims, **characterized in that** the bearing element (6, 6', 6") is made of flexible plastic.

12. Device according to Claim 11, **characterized in that** the bearing element (6, 6', 6") has a Shore A hardness of more than 30.

13. Device according to one of the preceding claims, **characterized in that** the bearing element (6, 6', 6") is made of several sectors (17) arranged around the flexible pipe.

14. Device according to one of Claims 1 to 12, **characterized in that** the bearing element (6, 6', 6") consists of a sleeve with slits (100) on the same side as the rear part of the stiffener.

15. Device according to one of the preceding claims, **characterized in that** it further comprises heat-exchange means.

16. Device according to Claim 15, **characterized in that** the heat-exchange means consist of channels (12, 12') through which sea water flows.

17. Device according to Claim 16, **characterized in that** the channels consist of grooves (12) formed on the interior surface of the bearing element.

18. Device according to Claim 16, **characterized in that** the channels consist of grooves (12') formed on the exterior surface of the bearing element.

19. Device according to one of the preceding claims, **characterized in that** it comprises an attachment support (20, 20', 80) bearing on the flexible pipe and on the build-in support (3, 19), the said attachment support being attached axially, on the one hand, to the bearing element (6, 6', 6") and, on the other hand, to the build-in support (3, 19) so as to block the bearing element with respect to the build-in support.

20. Device according to Claim 19, **characterized in that** the bearing element (6, 6') comprises a cylindrical rear part (29) bearing on a cylindrical part (30, 30', 83) of the attachment support (20, 80).

21. Device according to Claim 22, **characterized in that** the cylindrical rear part (29) of the bearing element (6, 6') is arranged on the outside of the cylindrical part (30, 30', 83) of the attachment support (20, 80).

22. Device according to one of Claims 20 or 21, **characterized in that** the bearing element (6) is attached to the attachment support (20) in the axial direction of the flexible pipe by bonding at the interface (43) between the surfaces that face each other belonging to the rear part (29) of the bearing element (6) and to the cylindrical part (30, 30') of the attachment support (20).

23. Device according to Claims 8 and 19, **characterized in that** the attachment support (20') comprises a front part (73) which has a conical exterior surface (74) which allows a rear part (29') of the bearing element (6) to be pressed against the interior surface of the build-in support (19).

24. Device according to Claim 19, **characterized in that** the attachment support (20, 20', 80) has a cylindrical bearing surface (101, 81) bearing on the build-in support (3, 19) so as to allow the attachment support (20, 20', 80) to be built directly onto the build-in support (3, 19).

25. Device according to Claim 19, **characterized in that** it comprises a connecting piece (35, 35', 35", 56, 63) pressing via bearing surfaces, on the one hand, against the attachment support and, on the other hand, against the build-in support, and capable of at least partially allowing the attachment support (20) to be built onto the build-in support (3, 19).

26. Device according to Claim 25, **characterized in that** the connecting piece is made of at least two sectors that can be joined together.

27. Device according to Claim 1, **characterized in that** the rear part of the bearing element (6) is attached to the flexible pipe (1) by clamping means (71, 72) which retain it in the axial direction of the flexible pipe.

28. Device according to Claim 1, **characterized in that** the bearing element (6) is retained in the axial direction of the flexible pipe by bonding an area of the interface between the rear part of the bearing element and the flexible pipe.

29. Device according to Claim 19, **characterized in that** it comprises a collar (68) tightened around the flexible pipe (1) and attached to the attachment support (20) so as to retain the bearing element (6) axially.

30. Device according to Claims 8 and 20, **characterized in that** the rear part (29) of the bearing element (6) is arranged between a cylindrical part (55) of the build-in support (19) and the front part (30') of the attachment support (20).

31. Device according to Claim 8, **characterized in that** the build-in support comprises a cylindrical rear part (22) against which the rear part (57) of the attachment support (20) bears.

32. Device according to Claims 4 and 19, **characterized in that** the surfaces which face each other belonging to the front part (30") of the connecting piece (35") and to the attachment support (20), have complementary screw threads (78).

33. Device according to Claim 1, **characterized in that** the bearing element (6') has enough resistance to deformation in bending to be able to constitute an additional stiffening element, the effect of which combines with that of the stiffener (7) to reduce the bending of the flexible pipe (1).

34. Device according to Claim 33, **characterized in that** the bearing and additional stiffening element is made of a flexible plastic which has an elastic modulus in tension of at least 50 MPa, preferably containing reinforcing fibres embedded in the said plastic.

35. Device according to Claims 33 or 34, **characterized in that** the bearing and additional stiffening element (6') comprises a metal internal armature (82) comprising elongate elements extending continuously over a certain length, and **in that** the rear ends of the said elongate armature elements extend beyond the rear end of the bearing and additional stiffening element (6') so that they can be anchored by attachment means (79) to the attachment support (80) acting as internal build-in support which is attached to the build-in support (19) by being built in.

36. Device according to Claims 8 and 35, **characterized in that** the exterior surface of the attachment and internal build-in support (80) constitutes a cylindrical contact bearing surface bearing on a corresponding bearing surface of the build-in support (19).

37. Device according to Claims 4 and 35, **characterized in that** the exterior surface of the internal build-in support (80) constitutes a cylindrical contact bearing surface (81) bearing on a corresponding part of the interior surface of the stiffener (7), the internal build-in support (80) being attached to the end fitting (3) by being built in.

38. Device according to Claim 1, **characterized in that** the bearing element (6, 6") comprises rings made of rigid material.

39. Device according to Claim 38, **characterized in that** the bearing element (6, 6") comprises metal rings (88, 89) constituting a blocking means limiting the bending of the flexible pipe (1) to a determined maximum value, the two circular edges of each ring (88, 89) comprising radial projections that fit in between the radial projections of the contiguous rings, so that the assembly comprising the stiffener (7) and the bearing and bend-blocking element (6, 6") constitutes a device for controlling the bending of the flexible pipe combining the functions of stiffener and bend limiter.

40. Device according to Claim 39, **characterized in that** the bearing and bend-blocking element (6") comprises blocking rings (88, 89) which are imbricated and the cross-section of which is in the shape of a U which is open towards the inside and towards the outside alternately.

41. Device according to Claim 40, **characterized in that** the blocking rings (88, 89) are separated by annular elastomeric elements (90, 91) which are compressed when the rings are moved with respect to each other, so that they lock up in a position that corresponds to the bend being blocked at the said maximum value.
